(19) Europäisches Patentamt
European Patent Office
Office européen des brevets

(11) **EP 3 497 615 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **18722023.1**

(22) Anmeldetag: **03.05.2018**

(51) Int Cl.:
*G06F 21/64* (2013.01)        *G06K 9/00* (2006.01)

(86) Internationale Anmeldenummer:
**PCT/EP2018/061258**

(87) Internationale Veröffentlichungsnummer:
**WO 2018/206373 (15.11.2018 Gazette 2018/46)**

(54) **VERFAHREN ZUR HANDSCHRIFTLICHEN ELEKTRONISCHEN SIGNATUR**

METHOD FOR HANDWRITTEN ELECTRONIC SIGNATURE

PROCÉDÉ DE SIGNATURE ÉLECTRONIQUE MANUSCRITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2017 DE 102017110048**

(43) Veröffentlichungstag der Anmeldung:
**19.06.2019 Patentblatt 2019/25**

(73) Patentinhaber: **Olschowy, Matthias**
**51427 Bergisch Gladbach (DE)**

(72) Erfinder: **Olschowy, Matthias**
**51427 Bergisch Gladbach (DE)**

(74) Vertreter: **Patent- und Rechtsanwälte**
**Dr. Solf & Zapf**
**Hauptstrasse 97**
**51465 Bergisch-Gladbach (DE)**

(56) Entgegenhaltungen:
**EP-A1- 2 350 911        EP-A1- 2 367 128**
**DE-A1-102011 050 156    US-A1- 2008 177 799**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 3 497 615 B1**

## Beschreibung

Die Erfindung betrifft ein Verfahren zur handschriftlichen elektronischen Signatur (HES) eines elektronischen Dokuments mittels einer handschriftlichen Unterschrift, wobei Erfassungsmittel die handschriftliche Unterschrift und mindestens ein die handschriftliche Unterschrift kennzeichnendes biometrisches Merkmal elektronisch erfassen, wobei mindestens ein Kennzeichnungsmittel eine das elektronische Dokument kennzeichnende Zeichenfolge erzeugt, und wobei ein elektronisches Signaturmittel einen elektronischen Signaturdatensatz für das elektronische Dokument mindestens basierend auf der das elektronische Dokument kennzeichnenden Zeichenfolge erzeugt. Zudem betrifft die Erfindung ein Signaturerstellungssystem zur Anwendung des Verfahrens, aufweisend mindestens einen ersten Dokumentenspeicher, in dem ein elektronisches Dokument abspeicherbar ist, mindestens ein erstes Anzeigemittel mit dem das elektronische Dokument anzeigbar ist, mindestens ein elektronisches Erfassungsmittel, mit dem eine handschriftliche Unterschrift zusammen mit mindestens einem die handschriftliche Unterschrift kennzeichnenden biometrischen Merkmal elektronisch erfassbar ist, mindestens ein Kennzeichnungsmittel mit dem eine das elektronische Dokument kennzeichnende Zeichenfolge erzeugbar ist, und ein elektronisches Signaturmittel, mit dem ein elektronischer Signaturdatensatz für das elektronische Dokument mindestens basierend auf der das elektronische Dokument kennzeichnenden Zeichenfolge erzeugbar ist, wobei mindestens das erste elektronische Kennzeichnungsmittel aus Daten des elektronischen Dokuments im ersten Dokumentenspeicher eine erste das elektronische Dokument kennzeichnende Zeichenfolge erzeugt.

Mit einer elektronischen Signatur oder handschriftlichen Unterschrift erklärt die unterzeichnende Person beweiskräftig ihren Willen und ihr Einverständnis mit dem Inhalt des jeweils unterzeichneten Dokuments. Damit eine konkrete Signatur oder Unterschrift tatsächlich beweiskräftig ist, sollte sie die unterzeichnende Person eindeutig authentifizieren, d. h. sie sollte Beweis dafür sein, dass eine bestimmte Person - und keine andere - ihren Willen ausgedrückt hat, und sie sollte mit dem zu unterzeichnenden Dokument eindeutig verbunden sein, d. h. die Verbindung zwischen ihr und einem anderen Dokument sollte ausgeschlossen werden können.

Ein vorteilhaftes Sicherheitsprinzip bei elektronischen Signaturverfahren besteht darin, das Signaturverfahren durch mehrere, voneinander unabhängige Schutzmaßnahmen gegen Angriffe abzusichern. Neben der Sicherheit wird von einem Signaturverfahren Praktikabilität erwartet, so dass der mit jeder Signatur zusammenhängende Aufwand und der Gesamtaufwand möglichst gering sind. Beide Anforderungen, die an Sicherheit und die an Praktikabilität, stehen im Wettstreit miteinander.

Das Verfahren der handschriftlichen Unterschrift auf Papier kann in solchen Fällen als sicher betrachtet werden, in denen der Signaturnehmer oder ein Vertreter Zeuge der Unterzeichnung ist. Andernfalls jedoch hat der Signaturnehmer nur die Möglichkeit der Prüfung auf Augenschein, insoweit er die handschriftliche Unterschrift des Signaturgebers überhaupt kennt. Ist ihm die handschriftliche Unterschrift unbekannt, ist er vollständig auf Vertrauen angewiesen, will er nicht erheblichen Aufwand für die Prüfung aufbringen. Nachteilig ist gegenüber einer handschriftlichen elektronischen Signatur (HES), dass selbst für eine eingehende Prüfung nur das Schriftbild zur Verfügung steht, nicht dagegen die im Kontext der HES erstellten wichtigen biometrischen Merkmale. Ein weiteres Problem ist die der Praktikabilität geopferte weit verbreitete Praxis, mehrseitige Dokumente nur auf einer Seite zu unterzeichnen, so dass nachträgliche Dokumentfälschungen nicht ausgeschlossen sind. Ein immer drängender werdendes Problem ist die infolge der zunehmenden Digitalisierung entsprechend abnehmende Praktikabilität der handschriftlichen Unterschrift, da solcherart erstellte Unterschriften außerhalb der digitalen Domäne entstehen und naturgemäß - jedenfalls als Original - auch bleiben werden. Schließlich sei auf ein Problem hingewiesen, dass zunächst nur eines der handschriftlichen elektronischen Signatur (HES) zu sein scheint, nämlich, wie weiter unten auch angeführt, die softwaretechnisch vollzogene Simulation einer gefälschten Signatur. Die handschriftliche Unterschrift auf Papier ist durch diese technische Entwicklung jedoch in gleicher Weise betroffen, da ein entsprechend softwarebestückter Roboter die gefälschte Unterschrift dann auf Papier zeichnen kann.

Die bekannte qualifizierte elektronische Signatur (QES) verwendet insbesondere ein PKI-Zertifikat. Dabei soll für diese Anmeldung je nach Kontext der Verwendung des Begriffs unter PKI-Zertifikat im engeren Sinn der Datensatz, z.B. im Format des X.509 Standards, der insbesondere den öffentlichen Schlüssel eines asymmetrischen Public-Key-Schlüsselpaares und weitere Informationen zur Zertifizierungsstelle und zum Zertifikatinhaber enthält, verstanden werden, und im weiteren Sinn das Paar, das aus dem Zertifikat im engeren Sinn und dem zum öffentlichen Schlüssel passenden geheimen Schlüssel besteht, verstanden werden.

Die bekannte QES und das dazugehörige Verfahren weisen insbesondere die folgenden Nachteile auf: Erstens beruht die Sicherheit der QES vollständig auf der Geheimhaltung des geheimen Schlüssels. Angriffe darauf sind möglich bei der Erstellung des Schlüsselpaares und/oder durch ein Verfahren, das den eigentlich nicht auslesbaren Speicher, in dem der geheime Schlüssel verwahrt wird, doch auszulesen in der Lage ist.

Zweitens ist ein Angriff auf die sechsstellige PIN möglich, mit der die missbräuchliche Verwendung der Signaturkarte, die den geheimen Schlüssel (in dem nicht auslesbaren Speicher) und daneben das Zertifikat mit dem öffentlichen Schlüssel enthält, gesichert wird.

Drittens besteht eine Erweiterung der Problematik um den geheimen Schlüssel darin, dass nur organisatorisch und mit hoher Sorgfalt, nicht aber grundsätzlich ausgeschlossen werden kann, dass PKI-Zertifikate auch ohne die Einwilligung und das Wissen der betroffenen Personen, Organisationen, Unternehmen bzw.

Behörden erzeugt werden. Bis zur Feststellung der Fälschung kann bereits erheblicher Schaden entstanden sein.

Viertens ist in diesem Zusammenhang zu bemerken, dass eine gefälschte QES-Signatur für sich über keinerlei Information verfügt, die es dem Signaturgeber erlauben würde, der behaupteten Authentizität zu widersprechen. Vielmehr ist die Beweispflicht uneingeschränkt bei dem Signaturgeber, den Nachweis zu erbringen, dass einer der oben erwähnten Angriffe ohne sein Verschulden erfolgt ist. Der Widerruf einer Signatur hat damit zwangsläufig die Komplexität eines Kriminalfalls, indem, da aus der Signatur selbst keine Indizien gewonnen werden können, die für oder wider die Authentizität sprechen, das vergleichsweise unbegrenzte Umfeld der beteiligten Personen und Organisationen untersucht werden muss. Die handschriftliche Signatur dagegen eröffnet die Möglichkeit, die Authentizität der Signatur durch Fokussierung auf diese selbst mit Hilfe eines Schriftsachverständigen zu prüfen.

Fünftens besteht das Verfahren der QES, wie auch das der sogenannten fortgeschrittenen elektronischen Signatur, darin, dass von dem zu signierenden Dokument in einem ersten Schritt ein Hash-Wert berechnet und dieser in einem zweiten Schritt mit dem geheimen Schlüssel des Signaturgebers verschlüsselt wird. Die QES zeichnet sich u.a. dadurch aus, dass die Berechnung des Hash-Wertes in einer Signaturerstellungseinheit (zum Beispiel Chipkartenleser) stattfindet, die von der Dokumenteneinheit (zum Beispiel Personal Computer), in welcher das Dokument eigentlich aufbewahrt wird, unterschieden und auch nicht Teil derselben ist und deshalb aus der Perspektive dieser Dokumenteneinheit eine externe Einheit darstellt. Zur Durchführung der QES werden beide Einheiten bidirektional miteinander verbunden und das Dokument oder ein auf dem Dokument basierter Hash-Wert von der Dokumenteneinheit nach der Signaturerstellungseinheit übertragen und nach Fertigstellung der Signatur diese wiederum von der Signaturerstellungseinheit zu der Dokumenteneinheit. Nun ist der Wesenskern der Signatur die Verschlüsselung, also der bereits erwähnte zweite Schritt. Der Hash- Wert selbst ist eine mit kryptographischen Mitteln erzeugte Kurzfassung des Dokuments ohne Bezug zum Signaturgeber, der erst durch die Verschlüsselung mit dem geheimen Schlüssel des Signaturgebers hergestellt wird. Tatsächlich wird also statt des Dokuments selbst dessen Kurzfassung signiert. In diesem Zusammenhang kann ein Problem des Verfahrens nun darin bestehen, dass beide Schritte, die Berechnung des Hash-Wertes und dessen Verschlüsselung, in der Dokumenteneinheit oder der Signaturerstellungseinheit ohne Unterbrechung durchgeführt werden, die dem Signaturgeber die Möglichkeit gäbe, sich von der Korrektheit des berechneten Hash-Wertes zu überzeugen, bevor er diesen signiert. Es ist also nicht ausgeschlossen, dass er den Hash-Wert eines anderen Dokuments signiert, was grundsätzlich möglich ist, wenn die Dokumenteneinheit kompromittiert ist und der Signaturerstellungseinheit ein anderes Dokument oder ein anderer Hash- Wert zuführt, als vom Signaturgeber eigentlich beabsichtigt. Es ist sogar nicht einmal grundsätzlich ausgeschlossen, dass die Signaturerstellungseinheit selbst kompromittiert ist.

Die DE 10 2011 050 156 B4 beschreibt ein bekanntes Verfahren für eine handschriftliche elektronische Signatur (HES) eines elektronischen Dokuments mittels einer handschriftlichen Unterschrift. Das Verfahren basiert auf einer ersten Vorrichtung mittels der eine Person eine handschriftliche Unterschrift leistet und mittels der die charakteristischen Unterzeichnungsdaten der Unterschrift der Person erfasst werden. Die erste Vorrichtung empfängt zudem von einer zweiten Vorrichtung Dokumentdaten, welche das zu unterzeichnende Dokument repräsentieren, und kombiniert die Dokumentdaten mit den Unterzeichnungsdaten elektronisch zu Kombinationsinformationen. Anschließend signiert die erste Vorrichtung die Kombinationsinformationen elektronisch mittels eines asymmetrischen Schlüsselpaares (wie zum Beispiel mit einer qualifizierten elektronischen Signatur) und überträgt die signierten Kombinationsinformationen an die zweite Vorrichtung. Die zweite Vorrichtung verbindet das Dokument mit den signierten Kombinationsinformationen und extrahiert die Unterzeichnungsdaten aus den Kombinationsinformationen und gibt diese zur Kontrolle durch die Person aus. Bei diesem Verfahren wird davon ausgegangen, dass zumindest die Integrität der ersten Vorrichtung und des geheimen Schlüssels des zur Signatur verwendeten asymmetrischen Schlüsselpaares gesichert ist. Dies ist jedoch in der Regel für die zu unterzeichnende Person nicht überprüfbar. Falls die erste Vorrichtung kompromittiert ist, kann insbesondere die digital erfasste Unterschrift abgegriffen, kopiert und/oder zur Signatur von anderen Dokumenten beziehungsweise anderen Hash-Werten ohne Kenntnis der unterzeichnenden Person verwendet werden. Selbst bei einer nicht kompromittierten Einheit ist die Sicherheit der Verschlüsselung nicht absolut und kann grundsätzlich mit geeigneten technischen Mitteln in ausreichender Zeit entschlüsselt werden, abhängig von dem verwendeten Algorithmus und der Schlüssellänge.

Die HES ist grundsätzlich zum Beispiel unter Verwendung von elektronischen Signatur-Pads als Signaturerstellungseinheit bekannt. Dabei unterschreibt der Unterschriftsgeber mittels der Signaturerstellungseinheit mit seiner handschriftlichen Unterschrift auf einer druckempfindlichen Sensorfläche, wobei insbesondere die Unterschrift schriftbildlich digital erfasst wird.

Im Unterschied zur handschriftlichen Unterschrift auf Papier kann die HES - über das Schriftbild der handschriftlichen Unterschrift hinaus - weitere Merkmale der handschriftlichen Unterschrift aufzeichnen, die biometrische Merkmale genannt werden, obgleich natürlich das Schriftbild selbst auch ein biometrisches Merkmal ist. Voll umfänglich ist im Fall eines Signatur-Pads die Aufzeichnung der physikalischen Bahnkurve, die von der Stiftspitze beschrieben wird, zusammen mit dem zeitlichen Druckverlauf in der Stiftspitze bzw. auf der Schreibunterlage. Die Bahnkurve wird am besten in Relation zu einem kartesischen (x, y) -Koordinatensystem aufgezeichnet und umfasst damit die zeitliche Bewegung in einer x-Richtung und in einer y-Richtung, also die beiden Funktionen x und y in Abhängigkeit der Zeit t:

$$t \quad \rightarrow \quad x(t)$$

$$t \quad \rightarrow \quad y(t)$$

Dazu kommt, wie bereits erwähnt, der zeitliche Druckverlauf

$$t \quad \rightarrow \quad d(t)$$

Das Schriftbild lässt sich aus der Bahnkurve, also den beiden Funktionen x(t) und y(t), ableiten, so dass die biometrischen Merkmale nicht zusätzliche, sondern - wie gesagt - die voll umfängliche Information der handschriftlichen Unterschrift enthalten.

Das grundsätzliche Problem der bekannten HES ist, dass sie kopiert und damit missbräuchlich für die Verbindung mit einem anderen elektronischen Dokument wiederverwendet werden kann - im Widerspruch zur Forderung nach Eindeutigkeit der Verbindung.

Genauer besteht das Problem darin, dass die HES nicht intrinsisch mit dem zu signierenden Dokument verbunden ist, sondern in der Signaturerstellungseinheit zunächst unabhängig vom Dokument entsteht und erst in einem zweiten Schritt - bestenfalls innerhalb der Signaturerstellungseinheit - mit dem Dokument verbunden wird - vgl. das oben genannte Patent DE 10 2011 050 156 B4 oder auch die EP 2 367 128 A1. Zu Prüfungszwecken jedoch muss die handschriftliche Unterschrift vollständig, inklusive ihrer biometrischen Merkmale, wieder freigelegt werden können, so dass der verbindende Prozess auch umkehrbar sein muss. Diese Problematik läuft u.a. darauf hinaus, dass die biometrischen Merkmale wenigstens teilweise verschlüsselt werden, um sie eben nur im Bedarfsfall einer Prüfung durch Entschlüsselung wieder freizugeben. Dabei wird die Verschlüsselung z.B. mit dem öffentlichen Schlüssel eines asymmetrischen Schlüsselpaares durchgeführt, dessen geheimes Gegenstück z.B. bei einem Notar sicher verwahrt wird. Bei Bedarf können die verschlüsselten Daten unter Mitwirkung des Notars entschlüsselt werden. Die Verschlüsselung biometrischer Merkmale der handschriftlichen Unterschrift hat aber folgende Probleme: Es muss sichergestellt sein, dass alle Signaturerstellungseinheiten aller Hersteller weltweit die biometrischen Merkmale der handschriftlichen Unterschrift sicher verschlüsseln, und zwar für alle in der Vergangenheit, Gegenwart und Zukunft geleisteten Signaturen beziehungsweise Unterschriften. Andernfalls könnte es etwa sein, dass handschriftliche elektronische Signaturen mit ihren biometrischen Merkmalen z.B. am schwarzen Markt gehandelt werden. Es genügt schließlich eine einzige aufgedeckte und in falsche Hände geratene Kopie, um in einem Angriff verwendet zu werden.

Für den Signaturnehmer sind verschlüsselte biometrische Merkmale entweder mit zusätzlichem Aufwand im Hinblick auf eine Unterschriftsprüfung verbunden, nämlich z.B. der Inanspruchnahme der Unterstützung durch das Notariat, was keinesfalls immer geleistet werden kann, oder er begnügt sich mit einer nur unzureichend geprüften HES. Es ist zwar keineswegs immer eine eingehende Prüfung der HES durch den Signaturnehmer notwendig, z.B. dann nicht, wenn die Aufzeichnung in Gegenwart des Signaturnehmers selbst oder eines Vertreters stattfindet und er gleichzeitig die verwendete Signaturerstellungseinheit selbst zur Verfügung stellt. Der Möglichkeit einer Prüfung dürfen aber nicht grundsätzliche administrative, organisatorische bzw. psychische Hindernisse in den Weg gestellt werden.

Im Vergleich zur QES haben die bekannten Verfahren der HES zudem das Problem, dass das Signaturverfahren keine Möglichkeit eröffnet, unkomplizierte Prüfungen der HES auf Authentizität durchzuführen, die nicht nur auf Augenschein des handschriftlichen Unterschrift-Schriftbildes beruhen, insoweit dem Signaturnehmer wenigstens das Schriftbild bekannt ist. Vielmehr müsste der Signaturgeber im Besitz einer vertrauenswürdigen Schriftprobe sein, die auch die biometrischen Merkmale umfasst.

Ein weiteres Problem tritt für die HES dadurch hinzu, insoweit die Signaturerstellungseinheit dazu ausgerichtet ist, biometrische Merkmale aufzuzeichnen, dass diese bei ihrer Erzeugung modifiziert werden bzw. sogar gänzlich unbrauchbar sein können. Das kann an einem hardware- oder softwaretechnischen Fehler in der Signaturerstellungseinheit liegen oder auch daran, dass trotz der vergleichsweise einfachen und geschützten Umgebung der Signaturerstellungseinheit diese aufgrund eines Angriffs kompromittiert ist. Solcherart erzeugte Signaturen wären im Streitfall durch den Signaturgeber u.U. anfechtbar. Das Problem ist dann brisant, wenn die biometrischen Daten nur im Streitfall geprüft bzw. überhaupt betrachtet oder genutzt werden und deshalb der Zustand vielleicht sogar über einen längeren Zeitraum unbemerkt bleibt.

Die EP 2 350 911 A0 beschreibt eine einfache handschriftliche Unterschrift, welche zu einem Dokument elektronisch erfasst wird und zusammen mit dem Dokument gespeichert wird. Der errechnete Hashwert des Dokuments wird dabei dem Benutzer angezeigt und dient zur Überprüfung durch den unterschreibenden Nutzer, ob das korrekte Dokument vom Computer an das Signaturerfassungsgerät übertragen wurde, sowie zur kryptografischen Verwendung durch den Computer und durch das Signaturerfassungsgerät. Insofern von einem sicheren und nicht kompromittierten Signaturerfassungsgerät ausgegangen werden kann, kann sich der Signaturgeber von der Korrektheit des verwendeten berechneten Hash-Wertes überzeugen, bevor er das Dokument beziehungsweise den das Dokument repräsentierenden Hash-Wert signiert. Es besteht weiterhin insbesondere das oben beschriebene Nachteil, dass die digital erfasste handschriftliche Unterschrift kopiert und für andere Dokumente verwendet werden könnte.

Die US 2008/177799 A1 beschreibt im Zusammenhang einer Integritätsprüfung eines gedruckten Dokuments die Erstellung eines Hashwert-ähnlichen Integritätsprüfungscodes für ein Dokument. Der Integritätsprüfungscode kann auf das Dokument geschrieben werden. Dieser Integritätsprüfungscode dient jedoch nicht zur Bildung einer Unterschrift sondern lediglich zur möglichen Feststellung einer Modifikation des Dokumenteninhalts.

Der Erfindung liegt die Aufgabe zugrunde, ein Verfahren für eine handschriftliche elektronische Signatur (HES) und ein Signaturerstellungssystem für ein derartiges Verfahren zur Verfügung zu stellen, die die oben beschriebenen Probleme verbessert und insbesondere die Sicherheit der Eindeutigkeit der Person und der Eindeutigkeit der Verbindung mit einem Dokument gewährleistet und dabei die Überprüfbarkeit vereinfacht.

Die Aufgabe wird erfindungsgemäß durch ein Verfahren mit den Merkmalen des kennzeichnenden Teils des Anspruchs 1 und durch ein Signaturerstellungssystem mit den Merkmalen des kennzeichnenden Teils des Anspruchs 11 gelöst.

Bei dem erfindungsgemäßen Verfahren exponiert ein Ausgabemittel visuell oder akustisch die das elektronische Dokument kennzeichnende Zeichenfolge und/oder eine darauf basierte Kurzform für den Unterschriftgeber zum handschriftlichen Nachschreiben. Anschließend erfasst das Erfassungsmittel eine handschriftlich der kennzeichnenden Zeichenfolge nachgeschriebene Zeichenfolge und mindestens ein die handschriftlich nachgeschriebene Zeichenfolge kennzeichnendes biometrisches Merkmal elektronisch. Danach erstellt das elektronisches Signaturmittel einen elektronischen Signaturdatensatz für das elektronische Dokument mindestens basierend auf der handschriftlich der kennzeichnenden Zeichenfolge (HED, HES1, HES2) nachgeschriebenen Zeichenfolge (SBH) und/oder dem die handschriftlich nachgeschriebene Zeichenfolge kennzeichnenden biometrischen Merkmal.

Das erfindungsgemäße Signaturerstellungssystem gibt mittels mindestens eines mit dem ersten Kennzeichnungsmittel elektronisch verbundenen ersten Ausgabemittels die erste kennzeichnende Zeichenfolge und/oder eine darauf basierende Kurzform visuell oder akustisch aus. Anschließend erfasst das Erfassungsmittel mindestens die handschriftlich der kennzeichnenden Zeichenfolge nachgeschriebenen Zeichenfolge zusammen mit mindestens einem die handschriftlich nachgeschriebene Zeichenfolge kennzeichnendes biometrisches Merkmal elektronisch. Danach erstellt ein elektronisches Signaturmittel einen elektronischen Signaturdatensatz für das elektronische Dokument mindestens basierend auf der handschriftlich der kennzeichnenden Zeichenfolge (HED, HES1, HES2) nachgeschriebenen Zeichenfolge (SBH) und/oder dem die handschriftlich nachgeschriebene Zeichenfolge kennzeichnenden biometrischen Merkmal.

Ein derartiges Verfahren und Signaturerstellungssystem hat den Vorteil, dass eine HES ermöglicht wird, die einen Missbrauch durch Wiederverwendung einer Kopie der handschriftlichen Unterschrift verhindert, da jede einzelne handschriftliche Unterschrift eindeutig für ein ganz bestimmtes Dokument ausgebildet ist.

Weitere vorteilhafte Ausgestaltungen der Erfindung ergeben sich aus der folgenden Figurenbeschreibung und den abhängigen Unteransprüchen.

Es zeigen:

Fig. 1a eine beispielhafte Kodierungstabelle zur Verwendung in einem erfindungsgemäßen Kennzeichnungsmittel,

Fig. 1b eine Umwandlung eines beispielhaften Hash-Wertes gemäß der Kodierungstabelle aus Fig. 1a,

Fig. 2a ein Blockdiagramm einer ersten Ausführungsform eines erfindungsgemäßen Signaturerstellungssystems,

Fig. 2b ein Blockdiagramm einer zweiten Ausführungsform eines erfindungsgemäßen Signaturerstellungssystems,

Fig. 2c ein Blockdiagramm einer dritten Ausführungsform eines erfindungsgemäßen Signaturerstellungssystems.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

Ein Kerngedanke des erfindungsgemäßen Verfahrens und des erfindungsgemäßen Signaturerstellungssystems ist, dass nicht die gewöhnlich geleistete Namensunterschrift, also die handschriftliche Zeichnung des Namens, für eine Authentifizierung des Signaturgebers wesentlich ist, sondern seine Handschrift. Überspitzt ausgedrückt bestünde eine Möglichkeit darin, dass der Signaturgeber das vollständige Dokument handschriftlich abschreibt. Da solches in der Regel weder für den Signaturgeber noch für den Signaturnehmer zumutbar ist, wird für das erfindungsgemäße Verfahren eine - in praktischer Hinsicht - umkehrbar eindeutige Kurzfassung des elektronischen Dokuments in Form einer das Dokument DOC kennzeichnenden Zeichenfolge HED, HES1, HES2 beziehungsweise eine darauf basierte abgekürzte Kurzform $HED_k$, $HES1_k$, $HES2_k$ der kennzeichnenden Zeichenfolge HED, HES1, HES2 verwendet, die vom Signaturgeber handschriftlich nachzuschreiben ist. Dazu erzeugt erfindungsgemäß ein Kennzeichnungsmittel KM1, KM2, KM3 die das elektronische Dokument DOC kennzeichnende Zeichenfolge HED, HES1, HES2.

Als eine solche kennzeichnende Zeichenfolge HED, HES1, HES2 wird vorzugsweise ein Hash-Wert H des Dokuments verwendet, der mittels eines Kennzeichnungsmittels KM1, KM2, KM3 erzeugt wird. Der Hash-Wert H wird insbesondere hexadezimal angegeben, z.B. basierend auf einem SHA-256 Hash-Algorithmus als eine 256-Bit hexadezimale Zeichenfolge:

$$H = \text{C1 42 B0 F7 93 5A A3 60 19 D7 38 3E B5 12 53 FE}$$

$$\text{2B 6F DE 0D 7E 70 D3 8A 19 11 37 5F 08 2B AB 93}$$

Dabei ist es besonders vorteilhaft, wenn das Kennzeichnungsmittel KM1, KM2, KM3 die kennzeichnende Zeichenfolge HED, HES1, HES2 als einen Hash-Wert H des elektronischen Dokuments DOC in einer Repräsentation berechnet, die auf einen Zeichensatz ZS gegründet ist, der - anders als die Hexadezimalziffern - das handschriftliche Schreiben von zusammenhängenden Zeichenketten, also Wörtern, ermöglicht. Das handschriftliche Schreiben von Wörtern ist notwendig, weil das handschriftliche Schreiben von isolierten Zeichen wiederum die Möglichkeit des Kopierens dieser isolierten Zeichen eröffnet, aus denen durch Zusammenfügen die kennzeichnenden Zeichenfolgen anderer Dokumente gebildet werden können.

Die Hexadezimalziffern werden üblicherweise nicht in zusammenhängenden Wörtern beziehungsweise handschriftlich miteinander verbundenen Zeichen geschrieben, die arabischen Ziffern 0 bis 9 sogar ausschließlich isoliert und die Großbuchstaben A bis F nur am Wortanfang, weswegen sie einerseits beide für die Bildung von handgeschriebenen Wörtern ungeeignet sind. Nun haben die Hexadezimalziffern auf der anderen Seite den entscheidenden Vorteil, dass sie genau die Werte eines Halbbytes kodieren, zu welchem Zweck schließlich der hexadezimale Zeichensatz überhaupt gegründet wurde.

Wenn die Größe eines Zeichensatzes ZS, der für die Bildung von Wörtern geeignet ist, eine Zweierpotenz $2^n$ ist, dann kann der Zeichensatz analog zum hexadezimalen Zeichensatz für die Kodierung einer Bit-Sequenz der Länge n verwendet werden.

Insbesondere berechnet das Kennzeichnungsmittel KM1, KM2, KM3 zur Erzeugung der kennzeichnenden Zeichenfolge HED, HES1, HES2 einen Hash-Wert H aus Daten des elektronischen Dokuments DOC und wandelt anschließend die Zeichen des Hash-Wertes H in eine Zeichenrepräsentation um, die auf einen Zeichensatz ZS gegründet ist, der mehr als sechzehn Zeichen umfasst. Vorzugsweise verwendet das Kennzeichnungsmittel KM1, KM2, KM3 zur Erzeugung der kennzeichnenden Zeichenfolge HED, HES1, HES2 einen Zeichensatz ZS, der aus sechsundzwanzig Kleinbuchstaben des modernen lateinischen Alphabets besteht. Hier ist alternativ auch eine ähnlich große Menge von beliebigen anderen Schriftzeichen anderer Sprachen beziehungsweise Kulturen möglich.

Zwar könnte der Zeichensatz ZS durch Verkleinerung auf die Größe einer Zweierpotenz gebracht werden. Dagegen spricht jedoch, dass ein größerer Zeichensatz neben möglichen Nachteilen den einen sicheren Vorteil der größeren Vielfalt und damit den der größeren Komplexität der nachzuschreibenden Zeichenfolgen hat. Bestünde der Zeichensatz im Extremfall etwa nur aus den binären Ziffern 0 und 1 als Zeichen, so wäre die daraus entstehende Komplexität der Zeichnung der nachzuschreibenden Zeichenfolge für eine Unterschrift jedenfalls zu klein. Es kann also ein Interesse darin bestehen, einen möglichen Zeichensatz nicht zu verkleinern, und zwar sicher dann, wenn der Zeichensatz ohnehin schon eher klein ist. Klein bedeutet im Kontext der Erfindung maximal sechzehn Zeichen. Es wird daher umgekehrt nötig sein, den Zeichensatz zu vergrößern bzw. aus dem bestehenden einen neuen und größeren mit der Größe einer Zweierpotenz $2^n$ zu konstruieren, was auf folgende Weise geschehen kann:

Die Zeichen des Zeichensatzes ZS werden zu Superzeichen kombiniert, d.h. entweder zu Paaren oder zu Tripeln oder zu Quadrupeln oder größeren Kombinationen, was einer Teilmenge des m-fachen kartesischen Produktes des als Menge verstandenen Zeichensatzes ZS entspricht, wobei m gleich zwei im Fall von Paaren und gleich drei im Fall von Tripeln ist. Die Zahl m wird mindestens so groß gewählt, dass mindestens $2^n$ Superzeichen gebildet werden können und damit die Kodierung jedes Wertes einer Bit-Sequenz BS der Länge n mit einem Superzeichen möglich ist. So würden sich Quadrupel eignen, um Superzeichen der Länge vier aus Zeichen des Alphabets einer natürlichen Sprache zu bilden, um mit diesen Bit-Sequenzen der Länge sechzehn mit einem Werteumfang von $2^{16} = 65536$ zu kodieren. So könnten etwa für den Fall der deutschen Sprache aus dem Wort Quadrupel u.a. die Superzeichen quad, adru und rupe gebildet werden. Es müsste sich nicht einmal um Teile echter Wörter der jeweiligen Sprache handeln. Vorteilhafterweise jedoch werden die Superzeichen im Einklang mit dem natürlichen Sprachempfinden gebildet, sodass das Schreiben jedes Superzeichens - als zusammenhängende Zeichenkette - entsprechend leichter von der Hand geht. Für den Fall von Zeichenpaaren, also m=2, wird unten ein für den ganzen westlichen Kulturkreis geeignetes Verfahren vorgestellt, das sprachunabhängig ist und deswegen auf die Bildung von als natürlich empfundenen Zeichenfolgen verzichtet.

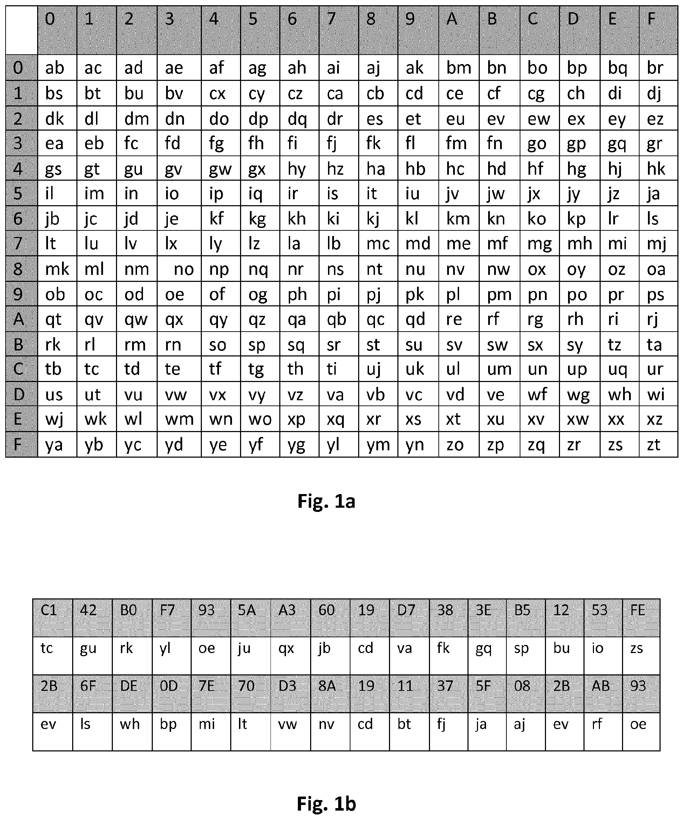

Eine beispielhafte Kodierungstabelle für eine Kodierung BS-K eines Kennzeichnungsmittels KM1, KM2, KM3 für die Umwandlung des Hash-Wertes H ist in Figur 1a dargestellt. In der vorteilhaften Ausführungsform wandelt das Kennzeichnungsmittel KM1, KM2, KM3 jeweils Werte einer 8-Bit-Sequenz des Hash-Wertes H in ein Superzeichen in Form eines Zeichenpaares des Zeichensatzes ZS um. Figur 1b zeigt die beispielhafte Umwandlung des beispielhaften Hash-Wertes H von oben durch ein Kennzeichnungsmittel KM1, KM2, KM3 anhand der Kodierungstabelle gemäß Figur 1a.

Um die Sicherheit der geschriebenen kennzeichnenden Zeichenfolge HED, HES1, HES2 zu verbessern, d.h. um zu verhindern, dass aus den Teilen von vielen in der Vergangenheit bereits geleisteten Unterschriften neue Unterschriften zusammengestellt und damit gefälscht werden können, ist es vorteilhaft, dass das Ausgabemittel AM1, AM2 mindestens zwei, insbesondere drei der jeweils aufeinanderfolgenden Superzeichen beziehungsweise Zeichenpaare zu jeweils einem zusammengesetzten Wort der kennzeichnenden Zeichenfolge HED, HES1, HES2 zusammenfasst. Somit ergibt sich zum Beispiel für den beispielhaften Hash- Wert H von oben und die umgewandelten Superzeichen beziehungsweise Zeichenpaare gemäß Figur 1b die beispielhafte kennzeichnende Zeichenfolge HED, HES1, HES2:

**tcgu rkyl oeju qxjb cdva fkgq spbu iozs evls whbp milt vwnv cdbt fjja ajev rfoe**

Vorteilhafterweise wandelt das Kennzeichnungsmittel KM1, KM2, KM3 die kennzeichnende Zeichenfolge HED, HES1, HES2 anhand einer Permutation der einzelnen Zeichen der Superzeichen beziehungsweise der Zeichenpaare weiter um, so dass das Vorkommen eines Zeichens an einer Stelle der kennzeichnenden Zeichenfolge HED, HES1, HES2 jeweils unabhängig wenigstens von seinen unmittelbar benachbarten Zeichen ist, um so die Kombinationsvielfalt benachbarter Zeichen zu maximieren. Dies kann zum Beispiel dadurch erreicht werden, dass zuerst die Zeichen an ungerader Position der kennzeichnenden Zeichenfolge HED, HES1, HES2 hintereinander aneinandergereiht und dann die Zeichen an gerader Position der kennzeichnenden Zeichenfolge HED, HES1, HES2 hintereinander aneinandergereiht werden. Das würde zu der folgenden Darstellung des dann umgeordneten Hash-Wertes H gemäß dem obigen Beispiel führen:

**tgry ojqj cvfg sbiz elwb mlvn cbfj aero cukl euxb dakq puos vshp itwv dtja jvfe**

Mit diesen verschiedenen Umwandlungen sind die ersten zweiunddreißig Zeichen alle vollständig unabhängig voneinander.

In einer vorteilhaften Ausführung exponiert das Ausgabemittel AM1, AM2 mindestens nur die ersten sechzehn Zeichen, insbesondere nur die ersten vierundzwanzig Zeichen der kennzeichnenden Zeichenfolge HED, HES1, HES2 als Kurzform $HED_k$, $HES1_k$, $HES2_k$ der kennzeichnenden Zeichenfolge HED, HES1, HES2 für den Unterschriftgeber zum handschriftlichen Nachschreiben. Dies kann in Form von einer besonderen Hervorhebung in der Darstellung der gesamten kennzeichnenden Zeichenfolge HED, HES1, HES2 selber, zum Beispiel durch Unterstreichung oder Fettschrift, oder durch eine separate Darstellung der Kurzform $HED_k$, $HES1_k$, $HES2_k$ erfolgen. Somit ergibt sich für die exponierte Kurzform $HED_k$, $HES1_k$, $HES2_k$ gemäß dem obigen Beispiel des Hash-Wertes H beispielhaft:

**tgry ojqj cvfg sbiz**

Für die beispielhafte Wahl der ersten vier Wörter mit einer Gesamtlänge von sechzehn Buchstaben für die Kurzform $HED_k$, $HES1_k$, $HES2_k$ gibt es eine Zahl von $26^{16}$ verschiedenen solchen Kurzformen der kennzeichnenden Zeichenfolgen HED, HES1, HES2, was etwas größer ist als $2^{75}$. Die Beschränkung auf die sechzehn Zeichen bei der Kurzform $HED_k$, $HES1_k$, $HES2_k$ entspricht also einem 75-Bit-Hash. Bei sechs Wörtern mit je vier Zeichen oder auch vier Wörtern mit je sechs Zeichen erhält man eine Anzahl entsprechend einem 112-Bit-Hash.

Für jedes der Wörter mit vier Zeichen gibt es $26^4 = 456.976$ mögliche Zeichenkombinationen, so dass schon bei nur vier Zeichen die Wahrscheinlichkeit der Wiederholung nur eines der zu zeichnenden Wörter gering ist. Bei Sechs-Zeichen-Wörtern gibt es $26^6 = 308.915.776$ verschiedene Wörter.

Dieses hier vorgestellte Verfahren mit der Bildung von Superzeichen in der Form von Zeichenpaaren mit der beispielhaft beschriebenen anschließenden Permutation hat als Vorteil gegenüber dem weiter oben beschriebenen Verfahren, welches Superzeichen mit natürlichsprachigen Quadrupeln verwendet, dass die Zahl von 456.976 der hier gebildeten Wörter mit jeweils vier Zeichen erheblich größer ist als die Zahl der 65536 Quadrupel in jenem Fall und damit ihre Wahrscheinlichkeit für eine Wiederholung bei verschiedenen elektronischen Dokumenten entsprechend kleiner ist.

Wie lang die Kurzform $HED_k$, $HES1_k$, $HES2_k$ der kennzeichnenden Zeichenfolge HED, HES1, HES2 vorteilhafterweise ist, hängt von der Anforderung an die Sicherheit der HES ab. Die Sicherheit nimmt sowohl mit der Länge der gezeichneten Wörter wie auch mit der Länge der Kurzform $HED_k$, $HES1_k$, $HES2_k$ der kennzeichnenden Zeichenfolge

HED, HES1, HES2, zu. Der Nachteil langer Wörter ist, dass ihr handschriftliches Nachschreiben wegen ihrer Ungewöhnlichkeit u.U. schwer fällt. Der Nachteil vieler Zeichen insgesamt kann die Unterzeichnung ebenfalls zu beschwerlich erscheinen lassen, so dass das Verfahren insgesamt an Akzeptanz einbüßt.

Weiterhin bevorzugt können die verwendeten Zeichen auf einfache Weise um die Großbuchstaben - bei unveränderter handschriftlicher Schreibbarkeit der kennzeichnenden Zeichenfolge HED, HES1, HES2 - erweitert werden, indem das Kennzeichnungsmittel KM1, KM2, KM3 das erste Zeichen eines zusammengesetzten Wortes der kennzeichnenden Zeichenfolge HED, HES1, HES2 in den dem Kleinbuchstaben entsprechenden Großbuchstaben umwandelt. Somit ergibt sich zum Beispiel für den beispielhaften Hash-Wert H von oben und die umgewandelten Superzeichen beziehungsweise Zeichenpaare gemäß Figur 1b die beispielhafte Kurzform $HED_k$:

**Tgry Ojqj Cvfg Sbiz**

Erfindungsgemäß wird die kennzeichnende Zeichenfolge HED, HES1, HES2 und/oder die Kurzform $HED_k$, $HES1_k$, $HES2_k$ von einem Ausgabemittel AM1, AM2 für den Signaturgeber zum handschriftlichen Nachschreiben exponiert. Anschließend erfasst erfindungsgemäß ein Erfassungsmittel EM eine handschriftlich nachgeschriebene Zeichenfolge SBH, die einer handschriftlichen Abschrift der kennzeichnenden Zeichenfolge HED, HES1, HES2 und/oder der Kurzform $HED_k$, $HES1_k$, $HES2_k$ entspricht. Dabei erfasst das Erfassungsmittel EM mindestens ein die handschriftlich nachgeschriebene Zeichenfolge SBH kennzeichnendes biometrisches Merkmal BMH elektronisch.

Zusätzlich zu der handschriftlich nachgeschriebene Zeichenfolge SBH wird vorzugsweise auch noch die namentliche Unterschrift SBU zusammen mit mindestens einem die namentliche Unterschrift SBU kennzeichnenden biometrischen Merkmal BMU erfasst werden.

Erfindungsgemäß wird ein elektronischer Signaturdatensatz SIG erzeugt, der mindestens auf der ersten kennzeichnenden Zeichenfolge HED, HES1, HES2 und mindestens auf dem die handschriftlich nachgeschriebene Zeichenfolge SBH kennzeichnenden biometrischen Merkmal BMH basiert.

Die erfindungsgemäße HES in Form des Signaturdatensatzes SIG gibt selbst in einer unsicheren Umgebung ein großes Maß an Sicherheit, solange die kennzeichnende Zeichenfolge HED des Dokuments DOC sicher berechnet wird. Das einfache Kopieren der erfindungsgemäßen HES ist unproblematisch, da diese für andere Dokumente als das Dokument DOC nicht verwendbar beziehungsweise in diesem Fall ungültig wäre.

Um die Fälschungssicherheit weiter zu verbessern und das Sammeln von vielen unterschiedlichen erfindungsgemäßen HES einer Person und die Verwendung dieser zum künstlichen beziehungsweise simulierten Zusammensetzen von Unterschriftsegmenten zu einer gültigen HES für ein anderes Dokument zu erschweren, ist in einer weiteren Ausführungsform der Erfindung vorgesehen, dass insbesondere die biometrischen Merkmale BMH der handschriftlich nachgeschriebenen Zeichenfolge SBH mit mindestens einem öffentlichen Schlüssel PK eines asymmetrischen Schlüsselpaares kryptografisch zu einem verschlüsselten biometrischen Merkmal $BMH_v$ verschlüsselt werden. Zudem können auch die biometrischen Merkmale BMU der namentlichen Unterschrift SBU mit dem Schlüssel PK zu einem verschlüsselten biometrischen Merkmal $BMU_v$ verschlüsselt werden. Dies verhindert, dass ein Dritter, der viele verschiedene HES einer Person gesammelt hat, die biometrischen Merkmale von Teilsegmenten der Unterschrift auswerten und für eine künstliche Erstellung einer neuen HES für ein anderes Dokument verwenden kann.

Der öffentliche Schlüssel PK ist insbesondere dem Signaturgeber oder einer Zertifizierungsstelle zugeordnet und vorzugsweise konfigurierbar. Insbesondere kann auch ein öffentlicher Schlüssel PK aus mehreren öffentlichen Schlüsseln PK, die jeweils einer Signatur von einer anderen Person zugeordnet sind, für die Verschlüsselung auswählbar sein.

In einer weiteren vorteilhaften Ausführungsform werden mindestens die kennzeichnende Zeichenfolge HED und mindestens die verschlüsselten biometrischen Merkmale $BMU_v$, $BMH_v$ und/oder die unverschlüsselten biometrischen Merkmale BMH, BMU zu dem Signaturdatensatz SIG verbunden und mittels mindestens einem ersten geheimen Schlüssel S1 kryptografisch digital signiert.

Vorteilhafterweise wird der Signaturdatensatz SIG zusätzlich mittels eines zweiten, von dem ersten geheimen Schlüssel S1 unabhängigen geheimen Schlüssel S2 kryptografisch digital signiert. Unabhängig bedeutet hier, dass zwei geheime Schlüssel S1, S2 zweier verschiedener und voneinander unabhängiger Zertifizierungsstellen eingesetzt werden. In diesem Fall gilt ein Signaturdatensatz SIG erst dann als gültig, wenn die Verbindung zwischen dem Dokument DOC beziehungsweise der erfassten handschriftlichen nachgeschriebenen Zeichenfolge SBH mit ihren biometrischen Merkmalen BMH durch beide Signaturen bestätigt ist und beide Signaturen gültig sind.

Je nach Anforderungen können nur bestimmte biometrische Merkmale BMH der handschriftlich nachgeschriebenen Zeichenfolge SBH und/oder bestimmte biometrische Merkmale BMU der handschriftlichen namentlichen Unterschrift SBU zur Aufnahme in den Signaturdatensatz SIG verschlüsselt werden und jeweils andere biometrische Merkmale zur Aufnahme in den Signaturdatensatz SIG unverschlüsselt belassen werden. So könnte man etwa nur den Druckverlauf während des Unterschriftsvorgangs verschlüsseln und die Bahnkurve dagegen gänzlich unverschlüsselt belassen, oder etwa umgekehrt eine der beiden Komponenten der Bahnkurve, also z.B. die Funktion $t \rightarrow y(t)$, verschlüsseln und die beiden anderen Funktionen $t \rightarrow x(t)$ und $t \rightarrow d(t)$ unverschlüsselt belassen.

Der Signaturdatensatz SIG beinhaltet vorteilhafterweise zusätzlich noch ein Datum der Unterschrift, ein erfasstes grafisches Schriftbild der handschriftlichen namentlichen Unterschrift SBU, ein erfasstes grafisches Schriftbild der handschriftlichen kennzeichnenden Zeichenfolge HED, HES1, HES2 beziehungsweise deren Kurzform $HED_k$, $HES1_k$, $HES2_k$ und/oder den vollständigen Namen des Signaturgebers.

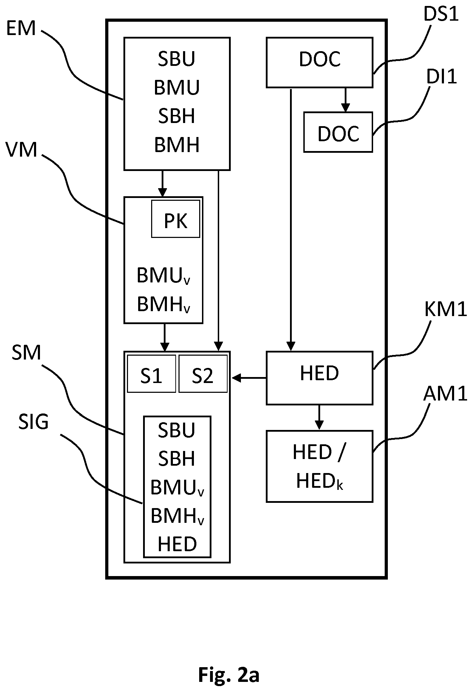

Fig. 2a zeigt eine erste Ausführungsform eines erfindungsgemäßen Signaturerstellungssystems. Das Signaturerstellungssystem weist einen ersten Dokumentenspeicher DS1 auf, in dem ein elektronisches Dokument DOC abspeicherbar ist. Das elektronische Dokument DOC kann beispielsweise in einer herkömmlichen Form als PDF oder WORD Dokument ausgebildet sein oder aber auch ein beliebiges anderes digitales Format, wie etwa eine möglicherweise mehrere Teil-Dokumente umfassende ZIP-Datei, aufweisen. Das elektronische Dokument DOC kann entweder durch das Signaturerstellungssystem selbst erzeugt oder in das Signaturerstellungssystem übertragen werden.

Zudem weist das Signaturerstellungssystem ein erstes Anzeigemittel DI1 auf, mit dem das elektronische Dokument DOC anzeigbar ist. Das erste Anzeigemittel DI1 kann insbesondere als ein herkömmliches LCD-Display oder ähnliches mit oder ohne berührungssensitiver Funktion oder aber auch als ein Drucker ausgebildet sein.

Erfindungsgemäß weist das Signaturerstellungssystem ein erstes elektronisches Kennzeichnungsmittel KM1 und ein mit dem ersten Kennzeichnungsmittel KM1 elektronisch verbundenes erstes Ausgabemittel AM1 auf. Das erste Kennzeichnungsmittel KM1 erzeugt aus Daten des elektronischen Dokuments DOC im ersten Dokumentenspeicher DS1 eine erste das elektronische Dokument DOC kennzeichnende Zeichenfolge HED gemäß dem oben beschriebenen Verfahren.

Das erste Ausgabemittel AM1 gibt die erste kennzeichnende Zeichenfolge HED - und/oder insbesondere die darauf basierende Kurzform $HED_k$ - visuell oder akustisch aus. Das erste Ausgabemittel AM1 kann vorteilhafterweise zur Ausgabe das erste Anzeigemittel DI1 verwenden, so dass das Dokument DOC und die erste kennzeichnende Zeichenfolge HED und/oder deren Kurzform $HED_k$ gemeinsam auf dem ersten Anzeigemittel DI1 ausgegeben werden.

Zudem weist das Signaturerstellungssystem ein elektronisches Erfassungsmittel EM auf, das die handschriftlich nachgeschriebene Zeichenfolge SBH zusammen mit mindestens einem die handschriftlich nachgeschriebene Zeichenfolge SBH kennzeichnenden biometrischen Merkmal BMH elektronisch erfasst. Vorzugsweise erfasst das Erfassungsmittel EM auch die namentliche Unterschrift SBU und ein die namentliche Unterschrift SBU kennzeichnendes biometrisches Merkmal BMU. Das Erfassungsmittel EM kann insbesondere als Signatur-Pad und/oder Touchscreen ausgebildet sein.

Außerdem weist das Signaturerstellungssystem ein elektronisches Signaturmittel SM auf, das einen elektronischen Signaturdatensatz SIG mindestens basierend auf einer kennzeichnenden Zeichenfolge HED, HES1, HES2 und mindestens einem die handschriftlich nachgeschriebene Zeichenfolge SBH kennzeichnenden biometrischen Merkmal BMH erstellt.

Insbesondere weist das Signaturerstellungssystem ein elektronisches Verschlüsselungsmittel VM auf, welches mindestens ein biometrisches Merkmal BMH der handschriftlich nachgeschriebenen Zeichenfolge SBH mit einem öffentlichen Schlüssel PK eines asymmetrischen Schlüsselpaares kryptografisch zu einem verschlüsselten biometrischen Merkmal $BMH_v$ verschlüsselt.

Vorteilhafterweise ist der von den Verschlüsselungsmitteln VM verwendete öffentliche Schlüssel PK konfigurierbar. Dies bedeutet, dass er austauschbar ist und durch einen anderen Schlüssel ausgetauscht werden kann. Insbesondere sind mehrere öffentliche Schlüssel PK in der Einheit ED, ES, ES1 gespeichert. Dabei ist der für die Verschlüsselung zu verwendende öffentliche Schlüssel PK durch den Benutzer der Einheit ES, ED, ES1 auswählbar.

Bevorzugt verbindet das elektronische Signaturmittel SM mindestens die kennzeichnende Zeichenfolge HED mit verschlüsselten biometrischen Merkmalen $BMU_v$, $BMH_v$ und/oder unverschlüsselten biometrischen Merkmalen BMH, BMU zu einem Signaturdatensatz SIG und signiert diesen kryptografisch digital mit mindestens einem, vorzugsweise mit zwei geheimen Schlüsseln S1, S2 jeweils eines asymmetrischen Schlüsselpaares.

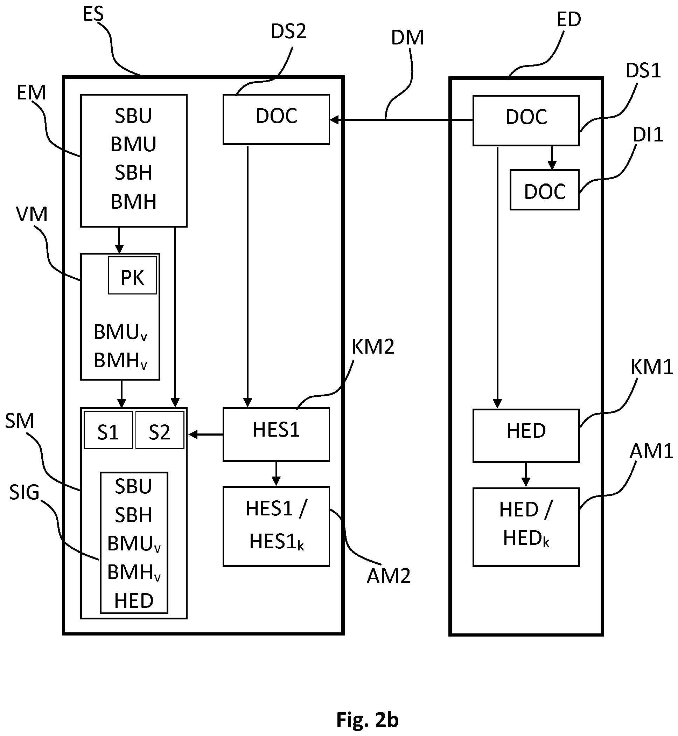

Figur 2b zeigt eine zweite Ausführungsform eines erfindungsgemäßen Signaturerstellungssystems. Im Unterschied zu der ersten Ausführungsform ist das Signaturerstellungssystem in zwei voneinander physikalisch getrennte Einheiten ED, ES aufgeteilt. Physikalisch getrennt bedeutet in diesem Zusammenhang, dass die Einheiten als voneinander unabhängige und eigenständige elektronische Geräte betrieben werden können, die lediglich mittels Datenübertragungsmittel kontrolliert Daten austauschen können.

Dabei weist die erste Einheit ED den ersten Dokumentenspeicher DS1, das erste Kennzeichnungsmittel KM1 und das erste Ausgabemittel AM1 auf, die dieselbe Funktion wie bei der ersten Ausführungsform haben.

Die von der ersten Einheit ED physikalisch getrennt ausgebildete zweite Einheit ES weist einen zweiten Dokumentenspeicher DS2, ein zweites Kennzeichnungsmittel KM2, ein mit dem zweiten Kennzeichnungsmittel KM2 elektronisch verbundenes zweites Ausgabemittel AM2 und das Erfassungsmittel EM auf, das ebenfalls die gleiche Funktion wie bei der ersten Ausführungsform hat.

Die erste Einheit ED und die zweite Einheit ES weisen jeweils ein elektronisches Datenübertragungsmittel DM auf. Die Datenübertragungsmittel DM übertragen das elektronische Dokument DOC von dem ersten Dokumentenspeicher DS1 der ersten Einheit ED in den zweiten Dokumentenspeicher DS2 der zweiten Einheit ES elektronisch. Das Datenübertragungsmittel DM basiert vorzugsweise auf einer kabellosen Datenübertragung, insbesondere auf Bluetooth, NFC oder 802.11-WLAN Technologie.

Das zweite Kennzeichnungsmittel KM2 erzeugt aus Daten des elektronischen Dokuments DOC im zweiten Dokumentenspeicher DS2 eine zweite, das elektronische Dokument DOC kennzeichnende Zeichenfolge HES1 gemäß dem oben beschriebenen Verfahren. Solange das Dokument DOC im ersten Dokumentenspeicher DS1 und im zweiten Dokumentenspeicher DS2 identisch sind, müssen die erste kennzeichnende Zeichenfolge HED und die zweite kennzeichnende Zeichenfolge HES1 gleich sein. Das zweite Ausgabemittel AM2 gibt die zweite kennzeichnende Zeichenfolge HES1 und/oder dessen Kurzform $HES1_k$ visuell oder akustisch aus, so dass die beiden kennzeichnenden Zeichenfolgen HED, HES1 oder die beiden Kurzformen $HED_k$, $HES1_k$ miteinander verglichen werden können. Damit kann sichergestellt werden, dass das Dokument DOC nicht manipuliert wurde.

Vorzugsweise weist die zweite Einheit ES das Verschlüsselungsmittel VM und insbesondere das Signaturmittel SM auf, die die gleichen Funktionen wie bei der ersten Ausführungsform haben.

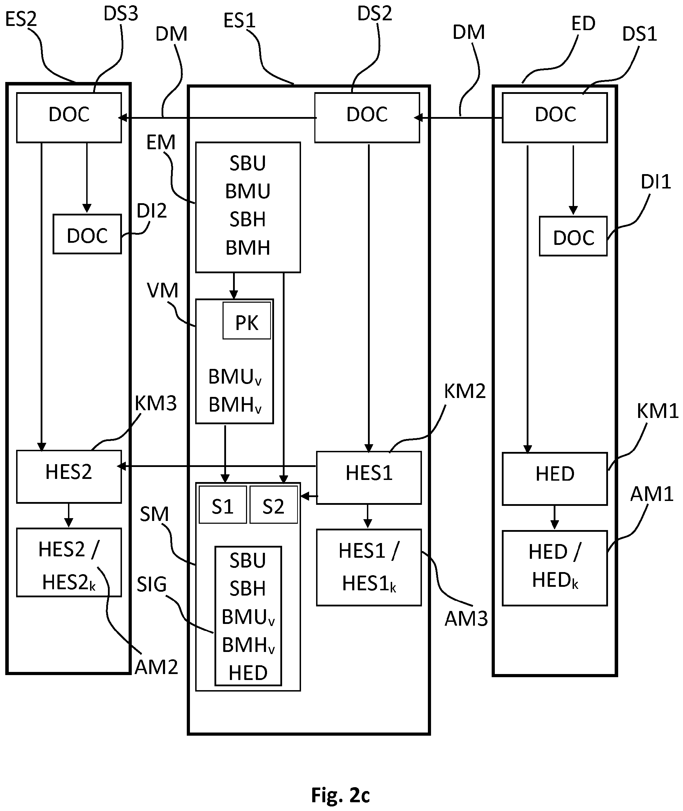

Figur 2c zeigt eine dritte Ausführungsform eines erfindungsgemäßen Signaturerstellungssystems. Im Unterschied zu der zweiten Ausführungsform ist die zweite Einheit ES in zwei voneinander physikalisch getrennte Teileinheiten ES1 und ES2 aufgeteilt. Die erste Teileinheit ES1 und die zweite Teileinheit ES2 weisen jeweils elektronische Datenübertragungsmittel DM auf.

Die erste Teileinheit ES1 weist den zweiten Dokumentenspeicher DS2, das zweite Kennzeichnungsmittel KM2 und das Erfassungsmittel EM auf, wobei deren Funktionen der zweiten Ausführungsform entsprechen.

Die zweite Teileinheit ES2 weist einen dritten Dokumentenspeicher DS3, ein drittes Kennzeichnungsmittel KM3, und das zweite Ausgabemittel AM2 auf.

Das Datenübertragungsmittel DM überträgt das elektronische Dokument DOC von dem zweiten Dokumentenspeicher DS2 der ersten Teileinheit ES1 in den dritten Dokumentenspeicher DS3 der zweiten Teileinheit ES2 elektronisch.

Das dritte Kennzeichnungsmittel KM3 der zweiten Teileinheit ES2 erzeugt aus Daten des elektronischen Dokuments DOC im dritten Dokumentenspeicher DS3 eine dritte, das elektronische Dokument DOC kennzeichnende Zeichenfolge HES2 gemäß dem oben beschriebenen Verfahren. Das zweite Ausgabemittel AM2 der zweiten Teileinheit ES2 gibt die dritte kennzeichnende Zeichenfolge HES2 und/oder deren Kurzform $HES2_k$ visuell oder akustisch aus.

Die Datenübertragungsmittel DM übertragen das elektronische Dokument DOC von der ersten Einheit ED auf die zweite Teileinheit ES2 über die zwischengeschaltete erste Teileinheit ES1. Vorzugsweise ist die erste Teileinheit ES1 bezüglich der Übertragungs- und Speichertechnik derart ausgebildet, dass von ihr bei jedem Signaturvorgang lediglich genau ein elektronisches Dokument DOC gespeichert und übertragen werden kann. Dies erschwert eine Manipulation oder einen Austausch des Dokumentes DOC während oder nach der Übertragung.

In einer bevorzugten Ausführungsform wird die zweite kennzeichnende Zeichenfolge HES1 mittels der Datenübertragungsmittel DM von der ersten Teileinheit ES1 auf die zweite Teileinheit ES2 übertragen. Das Kennzeichnungsmittel KM3 der zweiten Teileinheit ES2 weist Mittel zum Vergleichen der zweiten und der dritten kennzeichnenden Zeichenfolge HES1, HES2 beziehungsweise deren Kurzformen $HES1_k$, $HES2_k$ auf und zeigt eine Identität oder einen Unterschied über das Ausgabemittel AM2 an. Alternativ dazu weist die erste Teileinheit ES1 ein nicht dargestelltes drittes Ausgabemittel auf, mittels dem die zweite kennzeichnende Zeichenfolge HES1 beziehungsweise deren Kurzformen $HES1_k$ ausgegeben wird. Die zweite und dritte kennzeichnenden Zeichenfolge HES1, HES2 beziehungsweise deren Kurzformen $HES1_k$, $HES2_k$ können dann visuell verglichen werden. Damit kann sichergestellt werden, dass das Dokument DOC nicht manipuliert wurde.

Die zweite Einheit ES oder die erste Teileinheit ES1 der zweiten Einheit ES sind vorzugsweise in Form eines Stiftes zur Verwendung für handschriftliche Schrift ausgebildet. Vorzugsweise ist das Ausgabemittel AM2 als elektronisches Display zur Anzeige der zweiten kennzeichnenden Zeichenfolge HES1 beziehungsweise deren Kurzform $HES1_k$ ausgebildet und im Schaft des Stiftes angeordnet. Vorteilhafterweise ist der Stift zum Schreiben auf Papier, insbesondere durch eine Tintenmine oder Feder/Tintenpatrone oder Ähnliches ausgebildet. Der Stift weist insbesondere Drucksensoren oder Bewegungssensoren auf, mit denen er die biometrische Merkmale BMU, BMS erfasst. In einer vorteilhaften Ausführung des Stiftes weist der Stift einen Fingerabdrucksensor auf, mit dem er den Fingerabdruck beim Schreiben mit dem Stift als zusätzliches biometrisches Merkmal erfasst. In einer weiteren, nicht dargestellten, Ausführungsform ist der Stift zum Schreiben auf einer druckempfindlichen Sensorfläche, z.B. der eines Smartphones, eines Tablets oder eines Signatur-Pads ausgebildet. Insbesondere im Fall eines Signatur-Pads ergibt sich so die Möglichkeit, die Erfassung gleichzeitig durch zwei verschiedene Erfassungsmittel, die des Signatur-Pads und die des Stiftes, auszuführen.

Vorteilhafterweise wird aus den erfassten biometrischen Merkmalen BMU der handschriftlichen Unterschrift ein elektronisches Schriftbild in dem Signaturerstellungssystem erstellt. Das elektronische Schriftbild wird nach dem Erfassungsvorgang der handschriftlichen Unterschrift auf mindestens einem der Ausgabemittel AM1, AM2 oder Anzeigemittel DI1, DI2 angezeigt und/oder auf die erste Einheit ED oder zweite Teileinheit ES2 übertragen. Somit können die erfassten biometrischen Merkmale auf Konsistenz geprüft werden.

Vorzugsweise weist die erste Teileinheit ES1 das Verschlüsselungsmittel VM und insbesondere das Signaturmittel SM auf, die die gleichen Funktionen wie bei der zweiten Ausführungsform haben. Alternativ kann auch die zweite Teileinheit ES2 das Verschlüsselungsmittel VM und insbesondere das Signaturmittel SM aufweisen, wobei die erfassten biometrischen Merkmale BMU, BMH und die handschriftlich nachgeschriebene Zeichenfolge SBH und die namentliche Unterschrift SBU von der ersten Teileinheit ES1 zur zweiten Teileinheit ES2 mittels der Datenübertragungsmittel DM übertragen werden.

In weiteren vorteilhaften Ausführungen der zweiten und dritten Ausführungsformen versetzen sich die zweite Einheit ES bzw. die Teileinheit ES1 unmittelbar nach Übertragung des Dokuments DOC in einen von der jeweiligen elektronischen Umgebung abgeschirmten Arbeitsmodus, wobei die zweite kennzeichnende Zeichenfolge HES1 nur im abgeschirmten Arbeitsmodus erzeugt und dargestellt wird. In diesem Zusammenhang bedeutet abgeschirmter Modus insbesondere, dass die Datenübertragungsmittel DM ausgeschaltet sind und jeglicher anderer elektronischer Zugriff auf die zweite Einheit ES oder die Teileinheit ES1 unterbunden ist.

Der durch die Signaturmittel SM erzeugte und digital signierte Signaturdatensatz SIG kann mittels der Datenübertragungsmittel DM an die erste Einheit ED oder an eine externe Einheit zur Archivierung beziehungsweise Verwendung mit dem Dokument DOC übertragen werden.

Die erste Einheit ED, die zweite Einheit ES, und die Teileinheiten ES1, ES2 sind als eigenständige elektronische Geräte ausgebildet und weisen insbesondere einen Mikroprozessor oder Mikrocontroller auf, mit dem die Kennzeichnungsmittel KM1, KM2, KM3, die Übertragungsmittel DM, die Ausgabemittel AM1, AM2 und die Erfassungsmittel EM ausgeführt beziehungsweise gesteuert werden. Insbesondere können die Kennzeichnungsmittel KM1, KM2, KM3 als eine gesonderte integrierte Schaltung oder als Programm in einem separaten Mikrocontroller und vorzugsweise als ein Secure Enclave Prozessor (SEP) ausgebildet sein. Insbesondere sind die geheimen Schlüssel S1, S2 vorzugsweise von einem Secure Enclave Prozessor (SEP) gegen unberechtigte Zugriffe gesichert.

Bezugszeichenliste

| | |
|---|---|
| DOC | elektronisches Dokument |
| SBU | namentliche Unterschrift |
| BMU | biometrisches Merkmal der namentlichen Unterschrift |
| $BMU_v$ | verschlüsseltes biometrisches Merkmal der namentlichen Unterschrift |
| SBH | handschriftlich nachgeschriebene Zeichenfolge |
| BMH | biometrisches Merkmal der nachgeschriebenen Zeichenfolge |
| $BMH_v$ | verschlüsseltes biometrisches Merkmal der nachgeschriebenen |
| HED | erste kennzeichnende Zeichenfolge |
| HES1 | zweite kennzeichnende Zeichenfolge |
| HES2 | dritte kennzeichnende Zeichenfolge |
| $HED_k$ | Kurzform der ersten kennzeichnenden Zeichenfolge |
| $HES1_k$ | Kurzform zweiten kennzeichnenden Zeichenfolge |
| $HES2_k$ | Kurzform der dritten kennzeichnenden Zeichenfolge |
| H | Hash-Wert |
| ED | erste Einheit |
| ES | zweite Einheit |
| ES1 | erste Teileinheit der zweiten Einheit |
| ES2 | zweite Teileinheit der zweiten Einheit |
| DS1 | erster Dokumentenspeicher |
| DS2 | zweiter Dokumentenspeicher |
| DS3 | dritter Dokumentenspeicher |
| DI1 | erstes Anzeigemittel |
| DI2 | zweites Anzeigemittel |
| EM | Erfassungsmittel |
| KM1 | erstes Kennzeichnungsmittel |
| KM2 | zweites Kennzeichnungsmittel |
| KM3 | drittes Kennzeichnungsmittel |
| SM | Signaturmittel |
| VM | Verschlüsselungsmittel |
| DM | Datenübertragungsmittel |
| AM1 | erstes Ausgabemittel (Visualisierung oder akustische Ausgabe) |
| AM2 | zweites Ausgabemittel (Visualisierung oder akustische Ausgabe) |
| SIG | Signaturdatensatz |
| PK | öffentlicher Schlüssel |

S1        erster geheimer Schlüssel
S2        zweiter geheimer Schlüssel

**Patentansprüche**

**1.** Verfahren zur elektronischen Signatur eines elektronischen Dokuments (DOC) mittels einer handschriftlichen Unterschrift, wobei Erfassungsmittel (EM) die handschriftliche Unterschrift und mindestens ein die handschriftliche Unterschrift kennzeichnendes biometrisches Merkmal elektronisch erfassen, wobei mindestens ein Kennzeichnungsmittel (KM1, KM2, KM3) eine das elektronische Dokument (DOC) kennzeichnende Zeichenfolge (HED, HES1, HES2) erzeugt, und wobei ein elektronisches Signaturmittel (SM) einen elektronischen Signaturdatensatz (SIG) für das elektronische Dokument (DOC) mindestens basierend auf der das elektronische Dokument (DOC) kennzeichnenden Zeichenfolge (HED, HES1, HES2) erzeugt,
**dadurch gekennzeichnet, dass**
ein Ausgabemittel (AM1, AM2) die das elektronische Dokument (DOC) kennzeichnende Zeichenfolge (HED, HES1, HES2) für den Unterschriftgeber zum handschriftlichen Nachschreiben visuell oder akustisch exponiert, und das Erfassungsmittel (EM) eine handschriftlich der kennzeichnenden Zeichenfolge (HED, HES1, HES2) nachgeschriebenen Zeichenfolge (SBH) und mindestens ein die handschriftlich nachgeschriebene Zeichenfolge (SBH) kennzeichnendes biometrisches Merkmal (BMH) elektronisch erfasst, sowie das elektronische Signaturmittel (SM) den elektronischen Signaturdatensatz (SIG) für das elektronische Dokument (DOC) mindestens basierend auf der handschriftlich der kennzeichnenden Zeichenfolge (HED, HES1, HES2) nachgeschriebenen Zeichenfolge (SBH) und/oder dem die handschriftlich nachgeschriebene Zeichenfolge (SBH) kennzeichnenden biometrischen Merkmal (BMH) erstellt.

**2.** Verfahren nach Anspruch 1,
**dadurch gekennzeichnet, dass**
das Kennzeichnungsmittel (KM1, KM2, KM3) die kennzeichnende Zeichenfolge (HED, HES1, HES2) als einen Hash-Wert (H) des elektronischen Dokuments (DOC) in einer Repräsentation berechnet, in der die Werte einer Bit-Sequenz des Hash-Wertes (H) durch mindestens zwei Zeichen eines Zeichensatzes (ZS) kodiert werden und der Zeichensatz (ZS) so gewählt ist, dass die Anzahl seiner Zeichen größer oder kleiner als eine Zweierpotenz ist.

**3.** Verfahren nach Anspruch 1 oder 2,
**dadurch gekennzeichnet, dass**
das Kennzeichnungsmittel (KM1, KM2, KM3) zur Erzeugung der kennzeichnenden Zeichenfolge (HED, HES1, HES2) einen Hash-Wert (H) aus Daten des elektronischen Dokuments (DOC) berechnet und anschließend die Zeichen des Hash-Wertes (H) in eine Zeichenrepräsentation umwandelt, die auf einen Zeichensatz (ZS) gegründet ist, der mehr als sechzehn Zeichen umfasst.

**4.** Verfahren nach Anspruch 2 oder 3,
**dadurch gekennzeichnet, dass**
das Kennzeichnungsmittel (KM1, KM2, KM3) jeweils Werte einer 8-Bit-Sequenz oder einer 16-Bit-Sequenz des Hash-Wertes (H) in ein Superzeichen als Zeichenpaar beziehungsweise in ein Superzeichen als ein Zeichenquadrupel des Zeichensatzes (ZS) umwandelt.

**5.** Verfahren nach Anspruch 4,
**dadurch gekennzeichnet, dass**
das Ausgabemittel (AM1, AM2) einen Teil der Zeichen der kennzeichnenden Zeichenfolge (HED, HES1, HES2), insbesondere die ersten sechzehn oder die ersten vierundzwanzig Zeichen als Kurzform ($HED_k$, $HES1_k$, $HES2_k$) für die kennzeichnende Zeichenfolge (HED, HES1, HES2) für den Unterschriftgeber zum handschriftlichen Nachschreiben exponiert.

**6.** Verfahren nach Anspruch 5,
**dadurch gekennzeichnet, dass**
das Kennzeichnungsmittel (KM1, KM2, KM3) die kennzeichnende Zeichenfolge (HED) anhand einer Permutation der Zeichen weiter umwandelt, sodass das Vorkommen eines Zeichens an einer Stelle der Kurzform ($HED_k$, $HES1_k$, $HES2_k$) der kennzeichnenden Zeichenfolge (HED, HES1, HES2) jeweils unabhängig wenigstens von seinen unmittelbar benachbarten Zeichen der Kurzform ($HED_k$, $HES1_k$, $HES2_k$) ist.

7. Verfahren nach einem der Ansprüche 2 bis 6,
**dadurch gekennzeichnet, dass**
das Ausgabemittel (AM1, AM2) mindestens vier, insbesondere sechs der jeweils aufeinanderfolgenden Zeichen zu jeweils einem zusammengesetzten Wort der kennzeichnenden Zeichenfolge (HED, HES1, HES2) zusammenfasst.

8. Verfahren nach einem der Ansprüche 1 bis 7,
**dadurch gekennzeichnet, dass**
das Kennzeichnungsmittel (KM1, KM2, KM3) zur Erzeugung der Superzeichen der kennzeichnenden Zeichenfolge (HED, HES1, HES2) einen Zeichensatz verwendet, der aus sechsundzwanzig Kleinbuchstaben des modernen lateinischen Alphabets besteht.

9. Verfahren nach Anspruch 8,
**dadurch gekennzeichnet, dass**
das Ausgabemittel (AM1, AM2) das erste Zeichen eines zusammengesetzten Wortes der Kurzform ($HED_k$, $HES1_k$, $HES2_k$) der kennzeichnenden Zeichenfolge (HED, HES1, HES2) in den dem Kleinbuchstaben entsprechenden Großbuchstaben umwandelt.

10. Signaturerstellungssystem zur Anwendung des Verfahrens nach einem der Ansprüche 1 bis 9, aufweisend mindestens einen ersten Dokumentenspeicher (DS1), in dem ein elektronisches Dokument (DOC) abspeicherbar ist, mindestens ein erstes Anzeigemittel (DI1), mit dem das elektronische Dokument (DOC) anzeigbar ist, mindestens ein elektronisches Erfassungsmittel (EM), mit dem eine handschriftliche Unterschrift zusammen mit mindestens einem die handschriftliche Unterschrift kennzeichnenden biometrischen Merkmal elektronisch erfassbar ist, mindestens ein Kennzeichnungsmittel (KM1, KM2, KM3) mit dem eine das elektronische Dokument (DOC) kennzeichnende Zeichenfolge (HED, HES1, HES2) erzeugbar ist, und ein elektronisches Signaturmittel (SM), mit dem ein elektronischer Signaturdatensatz (SIG) für das elektronische Dokument (DOC) mindestens basierend auf der das elektronische Dokument (DOC) kennzeichnenden Zeichenfolge (HED, HES1, HES2) erzeugbar ist, wobei mindestens das erste elektronische Kennzeichnungsmittel (KM1) aus Daten des elektronischen Dokuments (DOC) im ersten Dokumentenspeicher (DS1) eine erste das elektronische Dokument (DOC) kennzeichnende Zeichenfolge (HED) gemäß dem Verfahren nach einem der Ansprüche 1 bis 9 erzeugt,
**dadurch gekennzeichnet, dass**
mindestens ein mit dem ersten Kennzeichnungsmittel (KM1) elektronisch verbundenes erstes Ausgabemittel (AM1) die erste kennzeichnende Zeichenfolge (HED) visuell oder akustisch ausgibt,
und das Erfassungsmittel (EM) mindestens die handschriftlich der kennzeichnenden Zeichenfolge (HED, HES1, HES2) nachgeschriebenen Zeichenfolge (SBH) zusammen mit mindestens einem die handschriftlich nachgeschriebene Zeichenfolge (SBH) kennzeichnenden biometrischen Merkmal (BMH) elektronisch erfasst, und das elektronische Signaturmittel (SM) den elektronischen Signaturdatensatz (SIG) für das elektronische Dokument (DOC) mindestens basierend auf der handschriftlich der kennzeichnenden Zeichenfolge (HED, HES1, HES2) nachgeschriebenen Zeichenfolge (SBH) und/oder dem die handschriftlich nachgeschriebene Zeichenfolge (SBH) kennzeichnenden biometrischen Merkmal (BMH) erstellt.

11. Signaturerstellungssystem nach Anspruch 10,
**dadurch gekennzeichnet, dass**
eine erste Einheit (ED) den ersten Dokumentenspeicher (DS1), das erste Kennzeichnungsmittel (KM1) und das erste Ausgabemittel (AM1) aufweist, und eine von der ersten Einheit (ED) physikalisch getrennt ausgebildete zweite Einheit (ES) mindestens einen zweiten Dokumentenspeicher (DS2), mindestens ein zweites Kennzeichnungsmittel (KM2) und das Erfassungsmittel (EM) aufweist,
und die erste Einheit (ED) und die zweite Einheit (ES) jeweils mindestens ein elektronisches Datenübertragungsmittel (DM) aufweisen, und das Datenübertragungsmittel (DM) das elektronische Dokument (DOC) von dem ersten Dokumentenspeicher (DS1) der ersten Einheit (ED) in den zweiten Dokumentenspeicher (DS2) der zweiten Einheit (ES) elektronisch überträgt, und das zweite Kennzeichnungsmittel (KM2) aus Daten des elektronischen Dokuments (DOC) im zweiten Dokumentenspeicher (DS2) eine zweite das elektronische Dokument (DOC) kennzeichnende Zeichenfolge (HES1) gemäß dem Verfahren nach einem der Ansprüche 1 bis 9 erzeugt.

12. Signaturerstellungssystem nach Anspruch 11,
**dadurch gekennzeichnet, dass**
die zweite Einheit (ES) eine erste Teileinheit (ES1) und eine davon physikalisch getrennte zweite Teileinheit (ES2) aufweist, und die erste Teileinheit (ES1) und die zweite Teileinheit (ES2) jeweils elektronische Datenübertragungsmittel (DM) aufweisen,

und die erste Teileinheit (ES1) den zweiten Dokumentenspeicher (DS2), das zweite Kennzeichnungsmittel (KM2) und das Erfassungsmittel (EM) aufweist, und die zweite Teileinheit (ES2) einen dritten Dokumentenspeicher (DS3), ein drittes Kennzeichnungsmittel (KM3), und das zweite Ausgabemittel (AM2) aufweist,

und das Datenübertragungsmittel (DM) das elektronische Dokument (DOC) von dem zweiten Dokumentenspeicher (DS2) der ersten Teileinheit (ES1) in den dritten Dokumentenspeicher (DS3) der zweiten Teileinheit (ES2) elektronisch überträgt

und das dritte Kennzeichnungsmittel (KM3) aus Daten des elektronischen Dokuments (DOC) im dritten Dokumentenspeicher (DS3) eine dritte das elektronische Dokument (DOC) kennzeichnende Zeichenfolge (HES2) gemäß dem Verfahren nach einem der Ansprüche 1 bis 9 erzeugt, und das zweite Ausgabemittel (AM2) die dritte kennzeichnende Zeichenfolge (HES2) visuell oder akustisch ausgibt.

13. Signaturerstellungssystem nach Anspruch 11 oder 12,
**dadurch gekennzeichnet, dass**
die Datenübertragungsmittel (DM) das elektronische Dokument (DOC) von der ersten Einheit (ED) auf die zweite Einheit (ES) oder über die zwischengeschaltete erste Teileinheit (ES1) auf die zweite Teileinheit (ES2) überträgt, wobei die zweite Einheit (ES) bzw. die erste Teileinheit (ES1) bezüglich der Übertragungs- und Speichertechnik derart ausgebildet ist, dass von ihr bei jedem Signaturvorgang lediglich genau ein elektronisches Dokument (DOC) gespeichert und übertragen werden kann.

14. Signaturerstellungssystem nach einem der Ansprüche 10 bis 13,
**dadurch gekennzeichnet, dass**
das Ausgabemittel (AM1, AM2) einen Teil der Zeichen der kennzeichnenden Zeichenfolge (HED, HES1, HES2), insbesondere die ersten sechzehn oder die ersten vierundzwanzig Zeichen als Kurzform ($HED_k$, $HES1_k$, $HES2_k$) der kennzeichnenden Zeichenfolge (HED, HES1, HES2) für den Signaturgeber zum handschriftlichen Nachschreiben visuell oder akustisch exponiert.

15. Signaturerstellungssystem nach einem der Ansprüche 10 bis 14,
**gekennzeichnet durch**
ein elektronisches Verschlüsselungsmittel (VM), welches mindestens ein biometrisches Merkmal (BMH) der handschriftlich nachgeschriebenen Zeichenfolge (SBH) mit einem öffentlichen Schlüssel (PK) eines asymmetrischen Schlüsselpaares kryptografisch zu einem verschlüsselten biometrischen Merkmal ($BMH_v$) verschlüsselt, und der von den Verschlüsselungsmitteln (VM) verwendete öffentliche Schlüssel (PK) konfigurierbar ist und insbesondere mehrere öffentliche Schlüssel (PK) in der Einheit (ED, ES, ES1) gespeichert sind und der für die Verschlüsselung zu verwendende öffentliche Schlüssel (PK) durch den Benutzer der Einheit (ES, ED, ES1) für einen Signaturvorgang auswählbar ist.

16. Signaturerstellungssystem nach einem der Ansprüche 11 bis 15,
**dadurch gekennzeichnet, dass**
die zweite Einheit (ES) oder die erste Teileinheit (ES1) der zweiten Einheit (ES) in Form eines Stiftes zur Verwendung für handschriftliche Schrift ausgebildet ist und die Erfassungsmittel (EM) für die elektronische Erfassung der biometrischen Merkmale (BMU, BMH) Bewegungssensoren, Drucksensoren und/oder Fingerabdrucksensoren aufweisen.

17. Signaturerstellungssystem nach einem der Ansprüche 11 bis 16,
**dadurch gekennzeichnet, dass**
sich die zweite Einheit (ES) oder die erste Teileinheit (ES1) unmittelbar nach Übertragung des Dokuments (DOC) in einen von der jeweiligen elektronischen Umgebung abgeschirmten Arbeitsmodus versetzen, und die das elektronische Dokument (DOC) kennzeichnende Zeichenfolge (HED, HES1, HES2) nur im abgeschirmten Arbeitsmodus erzeugt und dargestellt wird.

## Claims

1. Method for the electronic signature of an electronic document (DOC) by means of a handwritten signature, wherein detection means (EM) electronically detect the handwritten signature and at least one biometric feature characterizing the handwritten signature, wherein at least one characterizing means (KM1, KM2, KM3) produces a character sequence (HED, HES1, HES2) characterizing the electronic document (DOC), and wherein an electronic signature means (SM) produces an electronic signature record (SIG) for the electronic document (DOC) at least based on the character sequence (HED, HES1, HES2) characterizing the electronic document (DOC),

**characterized in that**

an output means (AM1, AM2) visually or acoustically exposes the character sequence (HED, HES1, HES2) characterizing the electronic document (DOC) for the signer for handwritten copying and the detection means (EM) electronically detects a character sequence (SBH) copied from the characterizing character sequence (HED, HES1, HES2) in handwriting and at least one biometric feature (BMH) characterizing the character sequence (SBH) copied in handwriting, and the electronic signature means (SM) generates the electronic signature record (SIG) for the electronic document (DOC) at least based on the character sequence (SBH) copied from the characterizing character sequence (HED, HES1, HES2) in handwriting and/or the biometric feature (BMH) characterizing the character sequence (SBH) copied in handwriting.

2. Method according to Claim 1,
   **characterized in that**
   the characterizing means (KM1, KM2, KM3) calculates the characterizing character sequence (HED, HES1, HES2) as a hash value (H) of the electronic document (DOC) in a representation in which the values of a bit sequence of the hash value (H) are coded by at least two characters of a character set (ZS) and the character set (ZS) is selected in such a manner that the number of its characters is greater than or less than a power of 2.

3. Method according to Claim 1 or 2,
   **characterized in that**
   the characterizing means (KM1, KM2, KM3), for generating the characterizing character sequence (HED, HES1, HES2), calculates a hash value (H) from data of the electronic document (DOC) and subsequently converts the characters of the hash value (H) into a character representation which is based on a character set (ZS) which comprises more than sixteen characters.

4. Method according to Claim 2 or 3,
   **characterized in that**
   the characterizing means (KM1, KM2, KM3) in each case converts values of an 8-bit sequence or a 16-bit sequence of the hash value (H) into a supercharacter as a pair of characters or into a supercharacter as a character quadruple of the character set (ZS).

5. Method according to Claim 4,
   **characterized in that**
   the output means (AM1, AM2) exposes a part of the characters of the characterizing character sequence (HED, HES1, HES2), in particular the first sixteen or the first twenty-four characters as a short form ($HED_k$, $HES1_k$, $HES2_k$) for the characterizing character sequence (HED, HES1, HES2) for the signer for handwritten copying.

6. Method according to Claim 5,
   **characterized in that**
   the characterizing means (KM1, KM2, KM3) converts the characterizing character sequence (HED) further by means of a permutation of the characters so that the occurrence of a character at a place in the short form ($HED_k$, $HES1_k$, $HES2_k$) of the characterizing character sequence (HED, HES1, HES2) is in each case independent at least of its immediately adjacent characters of the short form ($HED_k$, $HES1_k$, $HES2_k$).

7. Method according to one of Claims 2 to 6,
   **characterized in that**
   the output means (AM1, AM2) combines at least four, particular six of the in each case successive characters to form in each case a composite word of the characterizing character sequence (HED, HES1, HES2).

8. Method according to one of Claims 1 to 7,
   **characterized in that**
   the characterizing means (KM1, KM2, KM3) for generating the supercharacters of the characterizing character sequence (HED, HES1, HES2), uses a character set which consists of twenty-six small letters of the modern Latin alphabet.

9. Method according to Claim 8,
   **characterized in that**
   the output means (AM1, AM2) converts the first character of a composite word of the short form ($HED_k$, $HES1_k$,

HES2$_k$) of the characterizing character sequence (HED, HES1, HES2) into the capital letter corresponding to the small letter.

10. Signature generating system for applying the method according to one of Claims 1 to 9, having at least one first document memory (DS1) in which an electronic document (DOC) can be stored, at least one first display means (DI1) by means of which the electronic document (DOC) can be displayed, at least one electronic detection means (EM) by means of which a handwritten signature can be electronically detected together with at least one biometric feature characterizing the handwritten signature, at least one characterizing means (KM1, KM2, KM3) by means of which a character sequence (HED, HES1, HES2) characterizing the electronic document (DOC) can be produced, and an electronic signature means (SM) by means of which an electronic signature record (SIG) for the electronic document (DOC) can be produced at least based on the character sequence (HED, HES1, HES2) characterizing the electronic document (DOC), wherein at least the first electronic characterizing means (KM1) produces a first character sequence (HED) characterizing the electronic document (DOC) from data of the electronic document (DOC) in the first document memory (DS1) using the method according to one of Claims 1 to 9,
**characterized in that**
at least one first output means (AM1) electronically connected to the first characterizing means (KM1) outputs the first characterizing character sequence (HED) visually or acoustically,
and the detection means (EM) electronically detects at least the character sequence (SBH) copied from the characterizing character sequence (HED, HES1, HES2) in handwriting, together with at least one biometric feature (BMH) characterizing the character sequence (SBH) copied in handwriting, and the electronic signature means (SM) creates the electronic signature record (SIG) for the electronic document (DOC) at least based on the character sequence (SBH) copied from the characterizing character sequence (HED, HES1, HES2) in handwriting and/or the biometric feature (BMH) characterizing the character sequence (SBH) copied in handwriting.

11. Signature generating system according to Claim 10,
**characterized in that**
a first unit (ED) has the first document memory (DS1), the first characterizing means (KM1) and the first output means (AM1) and a second unit (ES) designed to be physically separate from the first unit (ED) has at least one second document memory (DS2), at least one second characterizing means (KM2) and the detection means (EM), and the first unit (ED) and the second unit (ES) have in each case at least one electronic data transmission means (DM) and the data transmission means (DM) electronically transmits the electronic document (DOC) from the first document memory (DS1) of the first unit (ED) into the second document memory (DS2) of the second unit (ES), and the second characterizing means (KM2) generates from data of the electronic document (DOC) in the second document memory (DS2) a second character sequence (HES1) characterizing the electronic document (DOC) according to the method according to one of Claims 1 to 9.

12. Signature generating system according to Claim 11,
**characterized in that**
the second unit (ES) has a first part-unit (ES1) and a second part-unit (ES2) physically separated from it and the first part-unit (ES1) and the second part-unit (ES2) have in each case electronic data transmission means (DM), and the first part-unit (ES1) has the second document memory (DS2), the second characterizing means (KM2) and the detection means (EM), and the second part-unit (ES2) has a third document memory (DS3), a third characterizing means (KM3) and the second output means (AM2),
and the data transmission means (DM) electronically transmits the electronic document (DOC) from the second document memory (DS2) of the first part-unit (ES1) into the third document memory (DS3) of the second part-unit (ES2) and the third characterizing means (KM3) generates from data of the electronic document (DOC) in the third document memory (DS3) a third character sequence (HES2) characterizing the electronic document (DOC) according to the method according to one of Claims 1 to 9 and the second output means (AM2) outputs the third characterizing character sequence (HES2) visually or acoustically.

13. Signature generating system according to Claim 11 or 12,
**characterized in that**
the data transmission means (DM) transmits the electronic document (DOC) from the first unit (ED) to the second unit (ES) or via the interposed first part-unit (ES1) to the second part-unit (ES2), wherein the second unit (ES) or the first part-unit (ES1), respectively, is designed with respect to the transmission and storage technology in such a manner that only exactly one electronic document (DOC) can be stored and transmitted by it with each signature event.

**14.** Signature generating system according to one of Claims 10 to 13,
**characterized in that**
the output means (AM1, AM2) exposes a part of the characters of the characterizing character sequence (HED, HES1, HES2), particularly the first sixteen or the first twenty-four characters as short form ($HED_k$, $HES1_k$, $HES2_k$) of the characterizing character sequence (HED, HES1, HES2) visually or acoustically for the signer for handwritten copying.

**15.** Signature generating system according to one of Claims 10 to 14,
**characterized by**
an electronic encryption means (VM) which encrypts at least one biometric feature (BMH) of the character sequence (SBH) copied in handwriting with a public key (PK) of an asymmetric pair of keys cryptographically to form an encrypted biometric feature ($BMH_v$) and the public key (PK) used by the encryption means (VM) is configurable and, in particular, a number of public keys (PK) are stored in the unit (ED, ES, ES1) and the public key (PK) to be used for the encryption is selectable by the user of the unit (ES, ED, ES1) for a signature event.

**16.** Signature generating system according to one of Claims 11 to 15,
**characterized in that**
the second unit (ES) or the first part-unit (ES1) of the second unit (ES) is designed in the form of a stylus for use for handwritten writing and the detection means (EM) have motion sensors, pressure sensors and/or fingerprint sensors for the electronic detection of the biometric features (BMU, BMH).

**17.** Signature generating system according to one of Claims 11 to 16,
**characterized in that**
the second unit (ES) or the first part-unit (ES1) enter immediately after transmission of the document (DOC) into an operating mode shielded from the respective electronic environment and the character sequence (HED, HES1, HES2) characterizing the electronic document (DOC) is generated and displayed only in the shielded operating mode.

## Revendications

**1.** Procédé de signature électronique d'un document électronique (DOC) au moyen d'une signature manuscrite, des moyens d'acquisition (EM) acquérant électroniquement la signature manuscrite et au moins une caractéristique biométrique qui identifie la signature manuscrite, au moins un moyen d'identification (KM1, KM2, KM3) générant une séquence de caractères (HED, HES1, HES2) identifiant le document électronique (DOC), un moyen de signature électronique (SM) générant un jeu de données de signature électronique (SIG) pour le document électronique (DOC) en se basant au moins sur la séquence de caractères (HED, HES1, HES2) identifiant le document électronique (DOC),
**caractérisé en ce que**
un moyen de diffusion (AM1, AM2) expose visuellement ou acoustiquement la séquence de caractères (HED, HES1, HES2) identifiant le document électronique (DOC) pour le signataire en vue d'une transcription manuscrite, et les moyens d'acquisition (EM) acquièrent électroniquement une séquence de caractères (SBH) transcrite manuscritement de la séquence de caractères (HED, HES1, HES2) identifiante et au moins une caractéristique biométrique (BMH) identifiant la séquence de caractères (SBH) transcrite manuscritement, et le moyen de signature électronique (SM) crée le jeu de données de signature électronique (SIG) pour le document électronique (DOC) en se basant au moins sur la séquence de caractères (SBH) transcrite manuscritement de la séquence de caractères (HED, HES1, HES2) identifiante et/ou sur la caractéristique biométrique (BMH) identifiant la séquence de caractères (SBH) transcrite manuscritement.

**2.** Procédé selon la revendication 1, **caractérisé en ce que** le moyen d'identification (KM1, KM2, KM3) calcule la séquence de caractères (HED, HES1, HES2) identifiante sous la forme d'une valeur de hachage (H) du document électronique (DOC) dans une représentation, dans laquelle les valeurs d'une séquence binaire de la valeur de hachage (H) sont codées par au moins deux caractères d'un jeu de caractères (ZS) et le jeu de caractères (ZS) est sélectionné de telle sorte que le nombre de ses caractères est supérieur ou inférieur à une puissance de deux.

**3.** Procédé selon la revendication 1 ou 2, **caractérisé en ce que** pour générer la séquence de caractères (HED, HES1, HES2) identifiante, le moyen d'identification (KM1, KM2, KM3) calcule une valeur de hachage (H) à partir des données du document électronique (DOC) et convertit ensuite les caractères de la valeur de hachage (H) en une représentation de caractères qui est fondée sur un jeu de caractères (ZS) qui comporte plus de seize caractères.

**4.** Procédé selon la revendication 2 ou 3, **caractérisé en ce que** le moyen d'identification (KM1, KM2, KM3) convertit respectivement des valeurs d'une séquence de 8 bits ou d'une séquence de 16 bits de la valeur de hachage (H) en un supercaractère sous la forme d'une paire de caractères ou en un supercaractère sous la forme d'un quadruplet de caractères du jeu de caractères (ZS).

**5.** Procédé selon la revendication 4, **caractérisé en ce que** le moyen de diffusion (AM1, AM2) expose une partie des caractères de la séquence de caractères (HED, HES1, HES2) identifiante, notamment les seize premiers ou les vingt-quatre premiers caractères sous une forme abrégée ($HED_k$, $HES1_k$, $HES2_k$) de la séquence de caractères (HED, HES1, HES2) identifiante pour le signataire en vue de la transcription manuscrite.

**6.** Procédé selon la revendication 5, **caractérisé en ce que** le moyen d'identification (KM1, KM2, KM3) effectue une conversion supplémentaire de la séquence de caractères (HED) identifiante à l'aide d'une permutation des caractères, de sorte que la survenance d'un caractère à un endroit de la forme abrégée ($HED_k$, $HES1_k$, $HES2_k$) de la séquence de caractères (HED, HES1, HES2) identifiante est respectivement indépendante au moins de son caractère directement voisin de la forme abrégée ($HED_k$, $HES1_k$, $HES2_k$).

**7.** Procédé selon l'une des revendications 2 à 6, **caractérisé en ce que** le moyen de diffusion (AM1, AM2) regroupe au moins quatre, notamment six des caractères respectivement successifs respectivement en un mot composé de la séquence de caractères (HED, HES1, HES2) identifiante.

**8.** Procédé selon l'une des revendications 1 à 7, **caractérisé en ce que** le moyen d'identification (KM1, KM2, KM3) utilise, pour générer le supercaractère de la séquence de caractères (HED, HES1, HES2) identifiante, un jeu de caractères qui se compose de vingt-six lettres minuscules de l'alphabet latin moderne.

**9.** Procédé selon la revendication 8, **caractérisé en ce que** le moyen de diffusion (AM1, AM2) convertit le premier caractère d'un mot composé de la forme abrégée ($HED_k$, $HES1_k$, $HES2_k$) de la séquence de caractères (HED, HES1, HES2) identifiante en la lettre majuscule correspondant à la lettre minuscule.

**10.** Système de création de signature destiné à appliquer le procédé selon l'une des revendications 1 à 9, possédant au moins une première mémoire de documents (DS1) dans laquelle peut être enregistré un document électronique (DOC), au moins un premier moyen d'affichage (DI1) avec lequel le document électronique (DOC) peut être affiché, au moins un moyen d'acquisition électronique (EM) avec lequel peut être acquise électroniquement une signature manuscrite conjointement avec au moins une caractéristique biométrique qui identifie la signature manuscrite, au moins un moyen d'identification (KM1, KM2, KM3) avec lequel peut être générée une séquence de caractères (HED, HES1, HES2) identifiant le document électronique (DOC), et un moyen de signature électronique (SM) avec lequel peut être généré un jeu de données de signature électronique (SIG) pour le document électronique (DOC) en se basant au moins sur la séquence de caractères (HED, HES1, HES2) identifiant le document électronique (DOC), au moins le premier moyen d'identification (KM1) électronique générant, à partir des données du document électronique (DOC) dans la première mémoire de documents (DS1), une première séquence de caractères (HED) identifiant le document électronique (DOC) conformément au procédé selon l'une des revendications 1 à 9, **caractérisé en ce que**

au moins un premier moyen de diffusion (AM1) relié électroniquement au premier moyen d'identification (KM1) délivre visuellement ou acoustiquement la première séquence de caractères (HED) identifiante, et le moyen d'acquisition (EM) acquiert électroniquement au moins la séquence de caractères (SBH) transcrite manuscritement de la séquence de caractères (HED, HES1, HES2) identifiante conjointement avec au moins une caractéristique biométrique (BMH) identifiant la séquence de caractères (SBH) transcrite manuscritement, et le moyen de signature électronique (SM) crée le jeu de données de signature électronique (SIG) pour le document électronique (DOC) en se basant au moins sur la séquence de caractères (SBH) transcrite manuscritement de la séquence de caractères (HED, HES1, HES2) identifiante et/ou sur la caractéristique biométrique (BMH) identifiant la séquence de caractères (SBH) transcrite manuscritement.

**11.** Système de création de signature selon la revendication 10, **caractérisé en ce qu'**une première unité (ED) possède la première mémoire de documents (DS1), le premier moyen d'identification (KM1) et le premier moyen de diffusion (AM1),

et une deuxième unité (ES), configurée de manière séparée physiquement de la première unité (ED), possède au moins une deuxième mémoire de documents (DS2), au moins un deuxième moyen d'identification (KM2) et le moyen d'acquisition (EM),

et la première unité (ED) et la deuxième unité (ES) possèdent respectivement au moins un moyen de transmission de données (DM) électronique, et le moyen de transmission de données (DM) transmet électroniquement le document électronique (DOC) de la première mémoire de documents (DS1) de la première unité (ED) dans la deuxième mémoire de documents (DS2) de la deuxième unité (ES),
et le deuxième moyen d'identification (KM2), à partir des données du document électronique (DOC) dans la deuxième mémoire de documents (DS2), génère une deuxième séquence de caractères (HES1) identifiant le document électronique (DOC) conformément au procédé selon l'une des revendications 1 à 9.

12. Système de création de signature selon la revendication 11, **caractérisé en ce que** la deuxième unité (ES) possède une première unité partielle (ES1) et une deuxième unité partielle (ES2) séparée physiquement de celle-ci, et la première unité partielle (ES1) et la deuxième unité partielle (ES2) possèdent respectivement un moyen de transmission de données (DM) électronique,
et la première unité partielle (ES1) possède la deuxième mémoire de documents (DS2), le deuxième moyen d'identification (KM2) et le moyen d'acquisition (EM), et la deuxième unité partielle (ES2) possède une troisième mémoire de documents (DS3), un troisième moyen d'identification (KM3) et le deuxième moyen de diffusion (AM2),
et le moyen de transmission de données (DM) transmet électroniquement le document électronique (DOC) de la deuxième mémoire de documents (DS2) de la première unité partielle (ES1) dans la troisième mémoire de documents (DS3) de la deuxième unité partielle (ES2),
et le troisième moyen d'identification (KM3), à partir des données du document électronique (DOC) dans la troisième mémoire de documents (DS3), génère une troisième séquence de caractères (HES2) identifiant le document électronique (DOC) conformément au procédé selon l'une des revendications 1 à 9, et le deuxième moyen de diffusion (AM2) délivre visuellement ou acoustiquement la troisième séquence de caractères (HES2).

13. Système de création de signature selon la revendication 11 ou 12, **caractérisé en ce que** le moyen de transmission de données (DM) transmet le document électronique (DOC) de la première unité (ED) à la deuxième unité (ES) ou à la deuxième unité partielle (ES2) par le biais de la première unité partielle (ES1) interconnectée, la deuxième unité (ES) ou la première unité partielle (ES1) étant configurée du point de vue de la technique de transmission et de mémorisation de telle sorte qu'un seul et unique document électronique (DOC) peut être enregistré et transmis par celles-ci à chaque opération de signature.

14. Système de création de signature selon l'une des revendications 10 à 13, **caractérisé en ce que** le moyen de diffusion (AM1, AM2) expose visuellement ou acoustiquement une partie des caractères de la séquence de caractères (HED, HES1, HES2) identifiante, notamment les seize premiers ou les vingt-quatre premiers caractères sous forme abrégée ($HED_k$, $HES1_k$, $HES2_k$) de la séquence de caractères (HED, HES1, HES2) identifiante pour le signataire en vue de la transcription manuscrite.

15. Système de création de signature selon l'une des revendications 10 à 14, **caractérisé par** un moyen de chiffrement électronique (VM), lequel chiffre de manière cryptographique au moins une caractéristique biométrique (BMH) de la séquence de caractères (SBH) transcrite manuscritement avec une clé publique (PK) d'une paire de clés asymétrique en une caractéristique biométrique chiffrée ($BMH_v$), et la clé publique (PK) utilisée par les moyens de chiffrement (VM) est configurable et plusieurs clés publiques (PK) sont notamment enregistrées dans l'unité (ED, ES, ES1) et la clé publique (PK) à utiliser pour le chiffrement peut être sélectionnée par l'utilisateur de l'unité (ES, ED ES1) pour une opération de signature.

16. Système de création de signature selon l'une des revendications 11 à 15, **caractérisé en ce que** la deuxième unité (ES) ou la première unité partielle (ES1) de la deuxième unité (ES) est réalisée sous la forme d'un stylet destiné à être utilisé pour l'écriture manuscrite et les moyens d'acquisition (EM) possèdent des capteurs de mouvement, des capteurs de pression et/ou des capteurs d'empreinte digitale pour l'acquisition électronique des caractéristiques biométriques (BMU, BMH).

17. Système de création de signature selon l'une des revendications 11 à 16, **caractérisé en ce que** la deuxième unité (ES) ou la première unité partielle (ES1), immédiatement après la transmission du document (DOC), passe dans un mode de fonctionnement blindé par rapport à l'environnement électronique respectif et la séquence de caractères (HED, HES1, HES2) identifiant le document électronique (DOC) n'est générée et représentée que dans le mode de fonctionnement blindé.

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | ab | ac | ad | ae | af | ag | ah | ai | aj | ak | bm | bn | bo | bp | bq | br |
| 1 | bs | bt | bu | bv | cx | cy | cz | ca | cb | cd | ce | cf | cg | ch | di | dj |
| 2 | dk | dl | dm | dn | do | dp | dq | dr | es | et | eu | ev | ew | ex | ey | ez |
| 3 | ea | eb | fc | fd | fg | fh | fi | fj | fk | fl | fm | fn | go | gp | gq | gr |
| 4 | gs | gt | gu | gv | gw | gx | hy | hz | ha | hb | hc | hd | hf | hg | hj | hk |
| 5 | il | im | in | io | ip | iq | ir | is | it | iu | jv | jw | jx | jy | jz | ja |
| 6 | jb | jc | jd | je | kf | kg | kh | ki | kj | kl | km | kn | ko | kp | lr | ls |
| 7 | lt | lu | lv | lx | ly | lz | la | lb | mc | md | me | mf | mg | mh | mi | mj |
| 8 | mk | ml | nm | no | np | nq | nr | ns | nt | nu | nv | nw | ox | oy | oz | oa |
| 9 | ob | oc | od | oe | of | og | ph | pi | pj | pk | pl | pm | pn | po | pr | ps |
| A | qt | qv | qw | qx | qy | qz | qa | qb | qc | qd | re | rf | rg | rh | ri | rj |
| B | rk | rl | rm | rn | so | sp | sq | sr | st | su | sv | sw | sx | sy | tz | ta |
| C | tb | tc | td | te | tf | tg | th | ti | uj | uk | ul | um | un | up | uq | ur |
| D | us | ut | vu | vw | vx | vy | vz | va | vb | vc | vd | ve | wf | wg | wh | wi |
| E | wj | wk | wl | wm | wn | wo | xp | xq | xr | xs | xt | xu | xv | xw | xx | xz |
| F | ya | yb | yc | yd | ye | yf | yg | yl | ym | yn | zo | zp | zq | zr | zs | zt |

**Fig. 1a**

| C1 | 42 | B0 | F7 | 93 | 5A | A3 | 60 | 19 | D7 | 38 | 3E | B5 | 12 | 53 | FE |
|---|---|---|---|---|---|---|---|---|---|---|---|---|---|---|---|
| tc | gu | rk | yl | oe | ju | qx | jb | cd | va | fk | gq | sp | bu | io | zs |
| 2B | 6F | DE | 0D | 7E | 70 | D3 | 8A | 19 | 11 | 37 | 5F | 08 | 2B | AB | 93 |
| ev | ls | wh | bp | mi | lt | vw | nv | cd | bt | fj | ja | aj | ev | rf | oe |

**Fig. 1b**

**Fig. 2a**

**Fig. 2b**

**Fig. 2c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011050156 B4
- EP 2367128 A1
- EP 2350911 A0
- US 2008177799 A1